(19) Europäisches Patentamt
European Patent Office
Office européen des brevets

(11) **EP 4 024 500 A1**

(12) **EUROPEAN PATENT APPLICATION**
published in accordance with Art. 153(4) EPC

(43) Date of publication:
**06.07.2022 Bulletin 2022/27**

(21) Application number: **19943019.0**

(22) Date of filing: **30.08.2019**

(51) International Patent Classification (IPC):
$H01M\ 4/13^{(2010.01)}$    $H01M\ 50/409^{(2021.01)}$
$H01M\ 4/38^{(2006.01)}$    $H01M\ 4/485^{(2010.01)}$
$H01M\ 4/505^{(2010.01)}$    $H01M\ 4/525^{(2010.01)}$
$H01M\ 4/587^{(2010.01)}$    $H01M\ 10/0585^{(2010.01)}$
$H01M\ 10/0587^{(2010.01)}$

(52) Cooperative Patent Classification (CPC):
H01M 4/13; H01M 4/38; H01M 4/485; H01M 4/505;
H01M 4/525; H01M 4/587; H01M 10/0585;
H01M 10/0587; Y02E 60/10; Y02P 70/50

(86) International application number:
**PCT/JP2019/034209**

(87) International publication number:
**WO 2021/038851 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **KABUSHIKI KAISHA TOSHIBA
Minato-ku
Tokyo
105-0023 (JP)**

(72) Inventors:
• WATANABE, Yuki
Tokyo 105-0023 (JP)
• NAMIKI, Yusuke
Tokyo 105-0023 (JP)

(74) Representative: **Hoffmann Eitle
Patent- und Rechtsanwälte PartmbB
Arabellastraße 30
81925 München (DE)**

(54) **ELECTRODE, BATTERY, AND BATTERY PACK**

(57) According to one embodiment, an electrode including an active material-containing layer is provided. The electrode has multiple grooves having depths differing from each other on a surface of the active material-containing layer. The multiple grooves intersect with a current collecting direction. The multiple grooves lie along a direction at an angle of 80° to 90° with respect to the current collecting direction.

F I G. 1

EP 4 024 500 A1

**Description**

FIELD

Embodiments generally relate to an electrode, a battery, and a battery pack.

BACKGROUND

In recent years, emission regulations have become strict beginning with Europe, and the trend toward improving fuel efficiency of automobiles has been accelerated. In particular, a 48V mild hybrid system having a large effect of improving fuel efficiency is attracting attention. With an increase in the input-output demands of motors, lithium ion batteries are also demanded to have excellent input-output performance.

As a method for improving the input-output performance of a battery, it is possible to increase the facing area between a positive electrode and a negative electrode contributing to charge and discharge. The positive electrode and the negative electrode may be included in a battery in a state of configuring an electrode group, and a separator may be provided between the positive electrode and the negative electrode in order to prevent a short circuit between them. In order to increase the facing area between the positive electrode and the negative electrode in the electrode group, efforts have been made such as increasing the number of windings or the number of stacks of the electrodes in the electrode group by reducing the thickness of the electrodes and the separator.

CITATION LIST

PATENT LITERATURE

Patent Literature 1: Jpn. Pat. Appln. KOKAI Publication No. 2009-59686

SUMMARY

TECHNICAL PROBLEM

An object is to provide an electrode capable of realizing a battery having excellent input-output performance and high safety, a battery having excellent input-output performance and high safety, and a battery pack including the battery.

SOLUTION TO PROBLEM

According to one embodiment, an electrode including an active material-containing layer is provided. The electrode has multiple grooves having depths differing from each other on a surface of the active material-containing layer. The multiple grooves intersect with a current collecting direction. The multiple grooves lie along a direction at an angle of 80° to 90° with respect to the current collecting direction.

According to another embodiment, provided is a battery including a positive electrode, a negative electrode, and an electrolyte. At least one of the positive electrode and the negative electrode includes the electrode according to the above embodiment.

According to yet another embodiment, provided is a battery pack including the battery according to the above embodiment.

BRIEF DESCRIPTION OF THE DRAWINGS

FIG. 1 is a perspective view schematically showing an example of an electrode according to an embodiment;
FIG. 2 is a plan view schematically showing an example of the electrode according to the embodiment;
FIG. 3 is a cross-sectional view schematically showing an example of the electrode according to the embodiment;
FIG. 4 is a partially cutaway plan view schematically showing another example of the electrode according to the embodiment;
FIG. 5 is a perspective view schematically showing an example of an electrode group according to an embodiment;
FIG. 6 is a perspective view schematically showing a partially unwound state of the electrode group;
FIG. 7 is a partially transparent perspective view schematically showing an electrode group of a reference example;

FIG. 8 is a plan view schematically illustrating movement of Li ions and electrons in an electrode of a reference example;

FIG. 9 is a partially transparent perspective view schematically showing the example of the electrode group according to the embodiment;

FIG. 10 is a plan view schematically illustrating movement of Li ions and electrons in the example of the electrode according to the embodiment;

FIG. 11 is a cross-sectional view schematically illustrating fracture of a separator in a conventional electrode group;

FIG. 12 is a cross-sectional view schematically illustrating fracture of a separator in the example of the electrode group according to the embodiment;

FIG. 13 is a cross-sectional view schematically illustrating a part of an example production method of the electrode according to the embodiment;

FIG. 14 is a graph showing a displacement amount spectrum along the current collecting direction of an example of the electrode according to the embodiment;

FIG. 15 is a schematic sectional view of an example of a battery according to an embodiment;

FIG. 16 is an enlarged sectional view of section A in FIG. 15;

FIG. 17 is a partially cutaway perspective view of another example of the battery according to the embodiment;

FIG. 18 is an enlarged sectional view of section B in FIG. 17;

FIG. 19 is an exploded view of yet another example of the battery according to the embodiment;

FIG. 20 is a schematic exploded perspective view of an example of a battery pack according to an embodiment; and

FIG. 21 is a block diagram showing an electric circuit of the battery pack shown in FIG. 20.

DETAILED DESCRIPTION

In an electrode group included in a battery, when a separator interposed between a positive electrode and a negative electrode is thinner, the input-output performance of the battery is improved; however, there is an increased risk that the separator fractures and a short circuit occurs.

The input-output performance is also improved by providing, on the electrode surface, multiple even grooves inclined at 30° to 90° with respect to the longitudinal direction of the electrode. Grooves are provided with an aim to improve impregnation of an electrolytic solution into the electrode group and to enhance diffusibility of Li ions in the electrolytic solution. However, if grooves are provided along the direction in which Li ions in the electrolytic solution are diffused, large current would continue to flow when an internal short circuit occurs. Consequently, the battery may generate heat and eventually ignite or rupture.

Embodiments will be explained below with reference to the drawings. Structures common to all embodiments are represented by the same symbols and redundant explanations will be omitted.

In addition, each drawing is a schematic view for explaining the embodiments and for promoting the understanding thereof. Though there are parts different from an actual device in shape, dimension, ratio, and the like, these structural designs may be properly changed taking the following explanations and known technologies into consideration.

[First Embodiment]

The electrode according to a first embodiment includes an active material-containing layer having multiple grooves on a surface thereof. The multiple grooves on the surface of the active material-containing layer have depths that differ from each other. The multiple grooves intersect with a current collecting direction and lie along a direction that is 80° to 90° with respect to the current collecting direction.

By applying the electrode to a battery, safety can be ensured and self-discharge can be suppressed. When the multiple grooves formed on the electrode surface have different depths, carrier ions (e.g. , Li ions) in the electrolyte will be unevenly distributed over the electrode surface, whereby excessive increase in current amount can be suppressed. Further, when the grooves formed on the electrode surface is inclined at an angle of 80° to 90° with respect to the current collecting direction, diffusion of carrier ions (e.g. , Li ions) within the electrolyte in the current collecting direction is inhibited. Herein, the current collecting direction refers to a direction in which carrier ions move during charge and discharge of a battery. The current collecting direction corresponds to a current flowing direction. Since the movement of carriers in the current collecting direction is inhibited, an excessive increase in current amount can be suppressed. For example, when an internal short circuit occurs in the electrode group including the electrode and the separator due to fracture of the separator or other factors, continuous flow of large current can be suppressed, whereby occurrence of the short circuit can be settled safely. In a battery using the above electrode, an overcurrent caused by a factor other than a short circuit is less likely to occur, as well.

Also, by providing multiple grooves on the electrode surface, contact between the positive electrode and the negative electrode may be avoided when the separator becomes fractured. When the depths of the multiple grooves are different from each other and uneven, the chance that the positive electrode and the negative electrode come into contact with each other is greatly reduced even further, as compared with the case where grooves having even depths are provided, and thus, the incident can be settled more safely. Whereas the input-output performance of the battery can be enhanced by reducing the thickness of the separator, the separator is more likely to become fractured. In the electrode group including the above electrode, an internal short circuit is less likely to occur even when the separator becomes fractured, leading to increased safety and suppression of self-discharge while maintaining excellent input-output performance.

The electrode according to the embodiment may be, for example, a positive electrode of a battery. Alternatively, the electrode according to the embodiment may be a negative electrode of a battery. That is, the electrode may be an electrode for a battery. Examples of the battery that may include the electrode according to the embodiment include secondary batteries such as a lithium ion secondary battery.

The active material-containing layer of the electrode contains an active material. The active material is, for example, an active material for a battery. In the electrode that is a positive electrode, the active material-containing layer may be a positive electrode active material-containing layer which contains a positive electrode active material. Likewise, in the electrode that is a negative electrode, the active material-containing layer may be a negative electrode active material-containing layer which contains a negative electrode active material. The active material-containing layer may further contain, for example, a binder and an electro-conductive agent in addition to the active material. Details of the active material and other materials that may be contained in the active material-containing layer will be described later.

The electrode may include a current collector. The active material-containing layer of the electrode may be provided on the current collector. The current collector has one or more principal surface, and may have, for example, a thin plate shape with a first principal surface and a second principal surface positioned on the reverse side of thereto. The active material-containing layer may be provided on one or more principal surface of the current collector. For example, the active material-containing layer may be provided on one of the principal surfaces of the current collector having a thin plate shape. Alternatively, the active material-containing layer may be provided on both the front and back principal surfaces (both the first principal surface and the second principal surface) of the current collector having a thin plate shape. That is, the active material-containing layer may be provided on one or both of the surfaces of the current collector.

The current collector may include a portion having no active material-containing layer provided on any principal surface thereof. Of the current collector, the portion not having the active material-containing layer provided thereon may function as a current collecting tab. For example, a portion not holding any active material-containing layer formed along one side of the current collector may function as the current collecting tab. The current collecting tab is not limited to the side that does not hold the active material-containing layer in the current collector. For example, plural strip-formed portions projecting from one side of the current collector can be used as current collecting tabs. The current collecting tab may be made of the same material as the current collector. Alternatively, a current collecting tab may be prepared separately from the current collector, and connected to at least one end face of the current collector by welding or the like.

The current collecting direction of the electrode corresponds to, for example, a direction toward the side where a current collecting tab is located. An example of a specific structure of the electrode is a structure in which a current collecting tab is provided along one side of the electrode. For example, the current collecting tab may be arranged along one of the long sides of a band-shaped electrode adjacently to the active material-containing layer. A direction along the shortest line connecting the boundary between the current collecting tab and the active material-containing layer, and the electrode end opposite to the boundary, that is, the other long side of the band-shaped electrode, corresponds to the current collecting direction of the electrode.

Another example of a specific structure of the electrode is a structure in which the current collecting tab protrudes from one side of the electrode. For example, the current collecting tab may extend outward from one side of the active material-containing layer having a rectangular shape. The current collecting tab may be disposed not along the entire length of the side from which the current collecting tab extends, but adjacently to the active material-containing layer with a part of that side as the boundary. A direction along the shortest line connecting the boundary and the electrode end opposite to the boundary corresponds to the current collecting direction of the electrode. The current collecting direction may be parallel to the other sides of the rectangular shape that intersect the side from which the current collecting tab extends.

An electrode terminal may be electrically connected to the electrode implemented in a battery. The electrode terminal is, for example, connected to the electrode directly or via an electrode lead. The electrode terminal or the electrode lead may be electrically connected to, for example, the current collecting tab. In the electrode, a direction toward a side where there is a connection point between the electrode and the electrode terminal or the electrode lead, for example, corresponds to the current collecting direction. As a specific example, a structure in which the electrode lead is connected to one side of the outer periphery of the electrode can be given. A direction along the shortest line connecting the connection point of the electrode lead and the electrode end opposite to the connection point corresponds to the current collecting direction of the electrode.

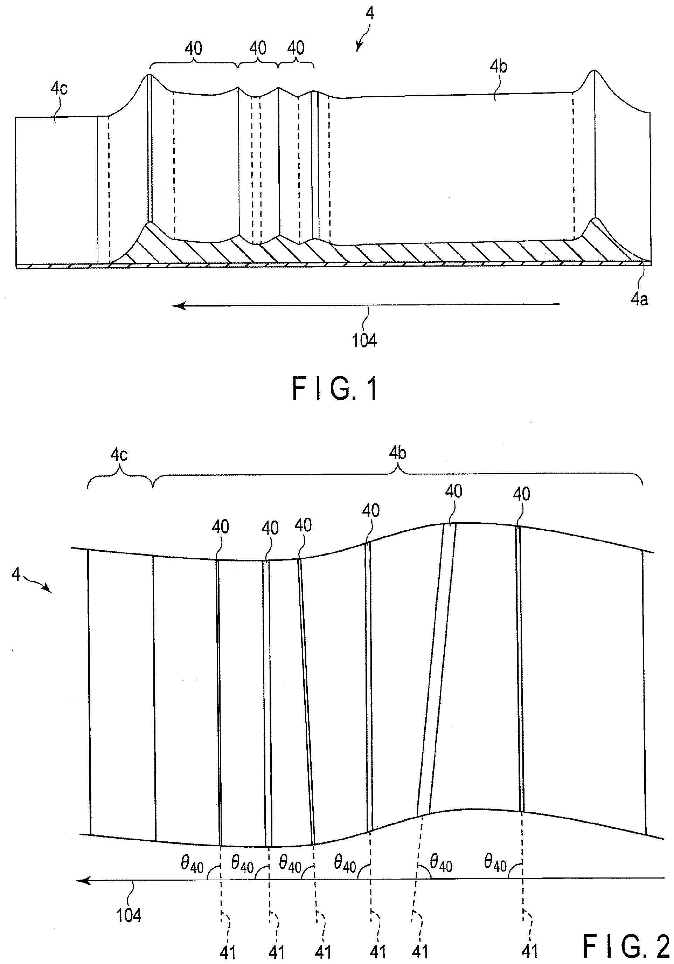

FIG. 1 is a perspective view schematically showing an example of the electrode according to the embodiment. In FIG. 1, an aspect in which the electrode is a positive electrode will be described as an example of the electrode. A positive electrode 4 shown in FIG. 1 includes a positive electrode current collector 4a and a positive electrode active material-containing layer 4b.

The positive electrode active material-containing layer 4b includes a positive electrode active material and is provided on the positive electrode current collector 4a. In FIG. 1, the positive electrode active material-containing layer 4b is provided on only one of the principal surfaces of the positive electrode current collector 4a; however, the positive electrode active material-containing layer 4b may be provided on both the front and back principal surfaces of the positive electrode current collector 4a. The positive electrode current collector 4a may include a portion in which the positive electrode active material-containing layer 4b is not supported on a surface thereof. In FIG. 1, the positive electrode current collector 4a includes the portion where the positive electrode active material-containing layer 4b is not supported along one side of the positive electrode current collector 4a. The portion of the positive electrode current collector 4a not supporting the positive electrode active material-containing layer 4b may function as a positive electrode current collecting tab 4c. During discharge of a battery including the positive electrode 4, current flows toward the positive electrode current collecting tab 4c from the electrode interior, that is, current flows in the current collecting direction 104, so that electric power can be extracted from an external terminal to which the positive electrode current collecting tab 4c is electrically connected. Instead of the positive electrode current collecting tab 4c that is part of the positive electrode current collector 4a, another current collecting tab may be electrically connected to the positive electrode 4. For example, a direction in which the current collecting tab or the electrode lead extends from the electrode toward an external terminal corresponds to the current collecting direction of the electrode. When the electrode is configured to be directly connected to the electrode terminal, a direction toward the junction with the electrode terminal corresponds to the current collecting direction.

Multiple grooves 40 are formed on the surface of the positive electrode active material-containing layer 4b. The depths of the multiple grooves 40 are not even and different from each other. Also, each groove 40 intersects with the current collecting direction 104.

FIG. 2 is a plan view schematically showing an example of the electrode according to the embodiment. In FIG. 2, directions along which the multiple grooves 40 respectively extend are indicated by broken lines 41. For example, a direction along which each groove 40 extends may correspond to the longitudinal direction of the groove. As a specific example, in regard to the grooves 40 extending linearly in straight lines as shown in FIG. 2, the orientations of the straight lines corresponds to the directions along which the grooves 40 extend. Angles $\theta_{40}$ between the broken lines 41 and the current collecting direction 104 fall within the range of 80° to 90°.

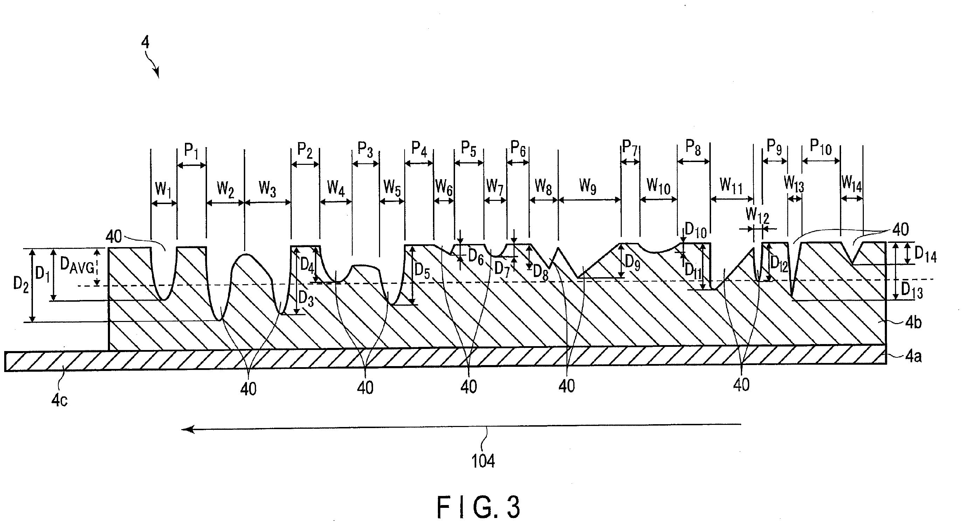

FIG. 3 is a cross-sectional view schematically showing an example of the electrode according to the embodiment. As shown in FIG. 3, multiple grooves 40 having different depths are formed on the surface of the positive electrode active material-containing layer 4b. Fourteen grooves 40 are shown in FIG. 3; however, the positive electrode 4 shown in FIG. 3 merely schematically represents an example of the embodiment, and the number of grooves 40 is not limited to that shown in the figure. The respective depths $D_1$ to $D_{14}$ of the grooves 40 include a depth having a value exceeding 10% given to or taken from the average depth $D_{AVG}$ of the depths $D_1$ to $D_{14}$. The depths of the grooves 40 are preferably distributed in the range of 10% or more and less than 20% backward and forward from the average depth $D_{AVG}$ as a center value.

Preferably, the average depth $D_{AVG}$ of the depths of the multiple grooves 40 from the surface of the positive electrode active material-containing layer 4b not facing the positive electrode current collector 4a toward the positive electrode current collector 4a is within the range of 1 $\mu$m to 8 um. Although a method of measuring the depth of each groove will be described later in detail, regarding the groove as a valley or crevasse, a difference in height from the bottom to the edge of the crevasse corresponds to the depth of the groove. If the heights of the edges on both sides of the crevasse are different, the height difference between the higher edge and the bottom is regarded as the depth of the groove.

Preferably, the electrode has a thickness of 40 $\mu$m or more and less than 75 $\mu$m. The thickness of the electrode herein refers to the total thickness combining the thickness of the active material-containing layer and the thickness of the current collector. For example, for the positive electrode 4 shown in FIG. 3, the thickness including both the thickness of the positive electrode active material-containing layer 4b and the thickness of the positive electrode current collector 4a (the thickness in the depth direction along the depths $D_1$ to $D_{14}$ of the grooves 40) is preferably 40 $\mu$m or more and less than 75 $\mu$m. In the electrode in which the active material-containing layer is provided on both the front and back surfaces of the current collector, the thickness over the entire stacking direction of three layers of "active material-containing layer / current collector / active material-containing layer" is preferably 40 $\mu$m or more and less than 75 $\mu$m. The electrode having a thickness in the above range can further exhibit the above-described effects.

The average width of the grooves on the surface of the active material-containing layer is preferably within the range of 100 $\mu$m to 800 $\mu$m. The widths $W_1$ to $W_{14}$ of the grooves 40 need not be uniform, and may be different, as in the example shown in FIG. 3. The widths of all the grooves on the surface of the active material-containing layer may be equal. Although a method of measuring the width of each groove will be described later in detail, regarding the groove as a valley or crevasse, a planar distance from one edge to an opposite edge across the valley (distance on a map ignoring topography) corresponds to the width of each groove. The width of the groove herein refers to a width in a direction along the current collecting direction of the electrode.

In the electrode included in a battery, an electrolyte may be filled in the grooves of the active material-containing layer. For example, a liquid electrolyte (electrolytic solution) or a gel electrolyte may be filled in each of the grooves. At the portions of the grooves in the active material-containing layer, since there is no active material there, Li ions diffuse by migrating within the electrolytic solution. The rate at which Li ions migrate in just the electrolytic solution is lower than the rate at which Li ions are diffused in the active material. The rate at which Li ions migrate in portions of just the electrolytic solution may be significantly low, and substantial movement may not be achieved. The width of each groove may correspond to the distance over which Li ions migrate in portions of just the electrolytic solution in the current collecting direction on the surface of the active material-containing layer. For example, in the positive electrode 4 shown in FIG. 3, each of the multiple grooves 40 of the positive electrode active material-containing layer 4b maybe filled with the electrolytic solution. There is no active material in the portions of each respective groove 40, and Li ions would have to migrate through the electrolytic solution to move along the current collecting direction 104 on the electrode surface. The distances over which Li ions move on the electrode surface along the current collecting direction 104 when passing through the upper portions of the respective grooves 40 correspond to the widths $W_1$ to $W_{14}$ of the respective grooves 40.

The average pitch of the grooves on the surface of the active material-containing layer is preferably within the range of 10 $\mu$m to 100 $\mu$m. The pitch of the grooves herein refers to a parallel distance between two adjacent grooves. Although a method of measuring the pitch between grooves will be described later in detail, a distance from an edge of a groove outward to a closer edge of an adjacent groove is regarded as the pitch between the grooves. The directions along which adjacent grooves extend may not be parallel to each other, as shown in FIG. 2; however, the pitch can be determined assuming a simplified state where the two grooves are parallel to each other. For example, the distances along the current collecting direction 104 between edges of two adjacent grooves 40 can be regarded as the pitches $P_1$ to $P_{10}$, respectively, as shown in FIG. 3. As for two adjacent grooves 40 whose edges overlap each other and forms a peak therebetween, there is no substantial distance between the grooves and the pitch can be regarded as zero.

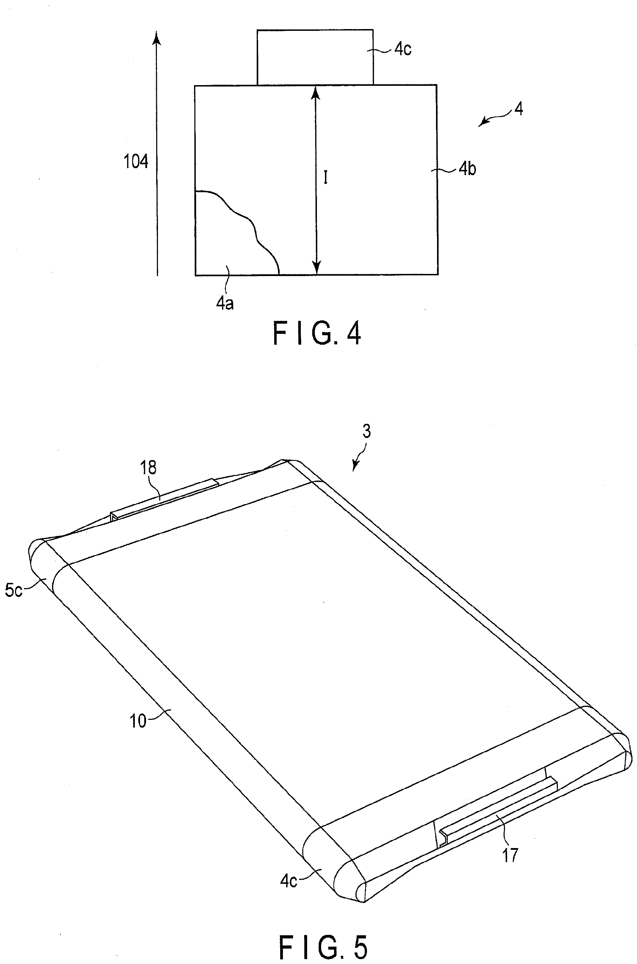

FIG. 4 is a partially cutaway plan view schematically showing another example of the electrode according to the embodiment. Herein, an example of the positive electrode is illustrated as an example of the electrode.

A positive electrode 4 shown in FIG. 4 includes a positive electrode current collector 4a and a positive electrode active material-containing layer 4b provided on a surface of the positive electrode current collector 4a. The positive electrode active material-containing layer 4b is supported on a principal surface of the positive electrode current collector 4a. FIG. 4 is depicted omitting the multiple grooves on the surface of the positive electrode active material-containing layer 4b.

The positive electrode current collector 4a includes a section in which the positive electrode active material-containing layer 4b is not provided on a surface thereof. This section serves, for example, as a positive electrode current collecting tab 4c. In the depicted example, the positive electrode current collecting tab 4c is a narrow portion having a narrower width than that of the positive electrode active material-containing layer 4b. The width of the positive electrode current collecting tab 4c may be narrower than the width of the positive electrode active material-containing layer 4b in this manner, or may alternatively be the same as the width of the positive electrode active material-containing layer 4b. Instead of the positive electrode current collecting tab 4c, which is part of the positive electrode current collector 4a, a separate electrically conductive member may be electrically connected to the positive electrode 4 and used as an electrode current collecting tab (positive electrode current collecting tab).

A direction along which a line segment I connecting the boundary between the positive electrode current collecting tab 4c and the positive electrode active material-containing layer 4b with the opposite end of the positive electrode 4 at the shortest distance corresponds to the current collecting direction 104. The direction from one end of the electrode to the opposite end of the electrode where the current collecting tab is located, in this manner, corresponds to the current collecting direction of the electrode.

If the above electrode is to be included in a battery, the electrode can be included in an electrode group. Hereinafter, an aspect of the electrode within an electrode group will be described as an example of the electrode.

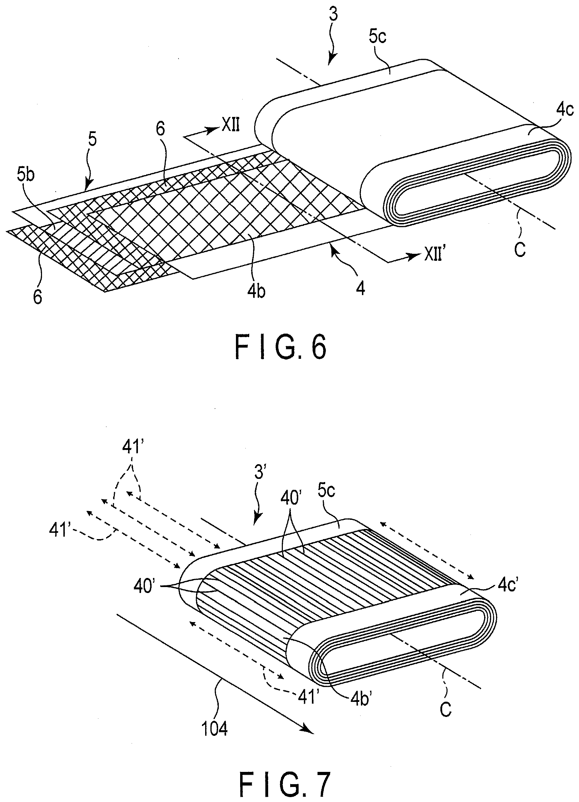

FIG. 5 is a perspective view schematically showing an example of an electrode group according to an embodiment. FIG. 6 is a perspective view schematically showing a partially unwound state of the electrode group. The electrode group shown in FIGS. 5 and 6 is an example having a wound structure. The electrode group may have, for example, a stacked structure.

As shown in FIG. 6, an electrode group 3 has a flat shape and includes a positive electrode 4, a negative electrode 5, and a separator 6 positioned between the positive electrode 4 and the negative electrode 5. The positive electrode 4 includes, for example, a band-shaped positive electrode current collector made of a foil, a positive electrode current collecting tab 4c composed of one end parallel to a long side of the positive electrode current collector, and a positive electrode active material-containing layer 4b formed on the positive electrode current collector excluding at least the portion which is the positive electrode current collecting tab 4c. On the other hand, the negative electrode 5 includes, for example, a band-shaped negative electrode current collector made of a foil, a negative electrode current collecting tab 5c composed of one end parallel to a long side of the negative electrode current collector, and a negative electrode active material-containing layer 5b formed on the negative electrode current collector excluding at least the portion which is the negative electrode current collecting tab 5c.

The electrode group 3 is an electrode group formed of the positive electrode 4, the separator 6, and the negative electrode 5 wound in a flat shape in such a manner where the positive electrode active material-containing layer 4b of the positive electrode 4 and the negative electrode active material-containing layer 5b of the negative electrode 5 face each other with the separator 6 interposed therebetween, the positive electrode current collecting tab 4c protrudes beyond the end of the negative electrode 5 and the separator 6 toward one side of the imaginary line C corresponding to the winding axis of the electrode group 3, and the negative electrode current collecting tab 5c protrudes beyond the end of the positive electrode 4 and the separator 6 toward the other side of the imaginary line C, that is, a flat wound electrode group. Thus, in the electrode group 3, an end of the positive electrode current collecting tab 4c wound in a flat spiral shape is positioned on a first end surface orthogonal to the imaginary line C. Also, an end of the negative electrode current collecting tab 5c wound in a flat spiral shape is positioned on a second end surface orthogonal to the imaginary line C.

As shown in FIG. 5, when implementing the electrode group 3 in a battery, a positive electrode lead 17 and a negative electrode lead 18 may be electrically connected to the electrode group 3, or an insulating sheet 10 may be provided to the electrode group 3. The positive electrode lead 17 is electrically connected to the positive electrode current collecting tab 4c. The negative electrode lead 18 is electrically connected to the negative electrode current collecting tab 5c. The insulating sheet 10 covers, for example, a portion of the outermost periphery of the electrode group 3 excluding the positive electrode current collecting tab 4c and the negative electrode current collecting tab 5c. The electrode 3 implemented in a battery may hold an electrolyte (not shown) .

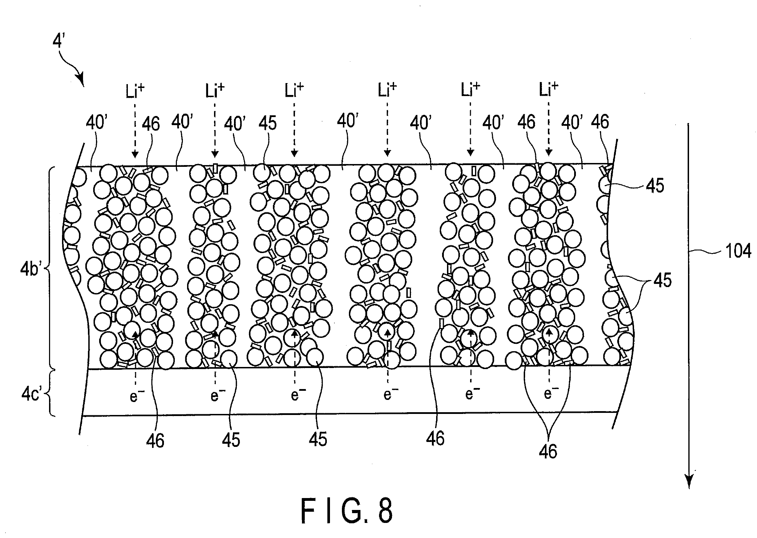

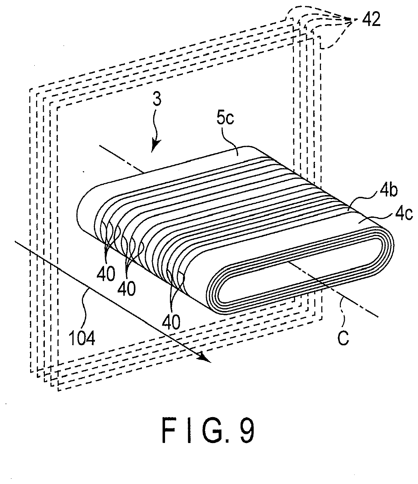

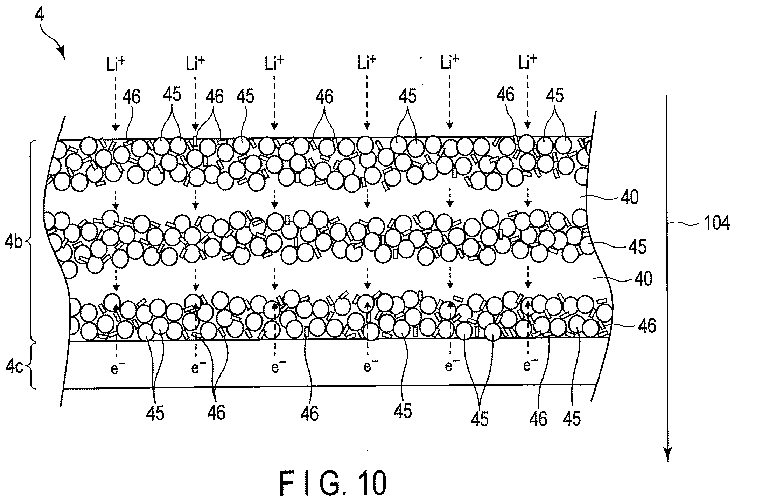

Next, the improvement of safety by suppression of continuous large current in the electrode according to the embodiment will be described with reference to FIGS. 7 to 10. FIG. 7 is a partially transparent perspective view schematically showing an electrode group of a reference example. FIG. 8 is a plan view schematically illustrating movement of Li ions and electrons in the electrode of the reference example. FIG. 9 is a partially transparent perspective view schematically showing the example of the electrode group according to the embodiment. FIG. 10 is a plan view schematically illustrating movement of Li ions and electrons in the example of the electrode according to the embodiment.

An electrode group 3' shown in FIG. 7 includes a positive electrode, a negative electrode, and a separator similar to those of the electrode group 3 described with reference to FIG. 6. However, FIG. 7 is depicted omitting a member covering the surface of the active material-containing layer 4b' positioned outermost in the wound structure of so that this surface can be seen. Multiple grooves 40' on the surface of the positive electrode active material-containing layer 4b' extend toward the positive electrode current collecting tab 4c', and broken lines 41' indicating the longitudinal direction of the grooves 40' extend along the current collecting direction 104.

As shown in FIG. 8, the positive electrode active material-containing layer 4b' includes positive electrode active materials 45 and electro-conductive agents 46. The electro-conductive agents 46 may be omitted. The positive electrode active material-containing layer 4b' may include a binder, but the binder is omitted to simplify and clarify FIG. 8.

At the surface of the positive electrode active material-containing layer 4b', the positive electrode active material 45 and the electro-conductive agent 46 are not provided in the portions corresponding to the multiple grooves 40'. However, since the direction of the multiple grooves 40' follows the current collecting direction 104, in the portions between the grooves 40' , the positive electrode active materials 45 and the electro-conductive agents 46 are arranged continuously from the end of the positive electrode active material-containing layer 4b' on the positive electrode current collecting tab 4c' side to the end in the opposite direction. Therefore, Li ions (Li$^+$) can rapidly diffuse through the positive electrode active materials 45 and the electro-conductive agents 46 over the entire width of the positive electrode active material-containing layer 4b' toward the positive electrode current collecting tab 4c', and electrons (e$^-$) can rapidly diffuse in the opposite direction. Thus, even with the grooves 40' formed on the surface of the positive electrode 4', large current can flow in the current collecting direction 104. Also, since Li ions are continuously supplied and large current continues to flow, heat generation and eventually ignition or rupture may occur. Therefore, when an internal short circuit or an overcurrent occurs, for example, a battery using the electrode group 3' may generate heat, reaching a dangerous level.

The electrode group 3 shown in FIG. 9 includes a positive electrode, a negative electrode, and a separator similar to those of the electrode group 3 described with reference to FIG. 6. However, FIG. 9 is depicted omitting a member covering the surface of the positive electrode active material-containing layer 4b positioned outermost in the wound structure so that this surface can be seen. Multiple grooves 40 on the surface of the positive electrode active material-containing layer 4b intersect the current collecting direction 104. As shown in FIG. 9, imaginary planes 42 including the respective grooves 40 intersect the current collecting direction 104. An angle at which the imaginary planes 42 and the current collecting direction 104 intersect falls within the range of 80° to 90°.

As shown in FIG. 10, the positive electrode active material-containing layer 4b includes positive electrode active materials 45 and electro-conductive agents 46. The electro-conductive agents 46 may be omitted. The positive electrode active material-containing layer 4b may include a binder, but the binder is omitted to simplify and clarify FIG. 10.

At the surface of the positive electrode active material-containing layer 4b, the positive electrode active material 45 and the electro-conductive agent 46 are not provided in the portions corresponding to the multiple grooves 40. Since the direction of the grooves 40 intersects the current collecting direction 104, there is no portion in which the positive electrode active materials 45 and the electro-conductive agents 46 are arranged continuously from the end of the positive electrode active material-containing layer 4b on the positive electrode current collecting tab 4c side to the end in the opposite direction. Therefore, Li ions ($Li^+$) moving across the width of the positive electrode active material-containing layer 4b in the current collecting direction 104 cross each groove 40. At this time, Li ions, for example, migrate through the liquid electrolyte filled in the grooves 40 because there is no positive electrode active material 45 or electro-conductive agent 46 in the portion of grooves 40, limiting the movement rate of the Li ions. In addition, the movement rate of electrons ($e^-$) in a direction opposite to the moving direction of Li ions is limited, and the amount of current that can flow in the current collecting direction 104 is limited.

In such a manner, with the direction in which the multiple grooves 40 extend intersecting the current collecting direction 104, that is, the direction in which current flows through the electrode, large current is difficult to flow on the surface of the positive electrode 4. Therefore, even when large current flows due to occurrence of an internal short circuit caused by fracture of the separator or other factors, for example, providing grooves along a direction intersecting the current collecting direction 104 can suppress continuous flow of large current, and therefore high safety can be exhibited.

On the other hand, within the range of the current value in normal use such as use in automobiles or industrial use, providing the above grooves on the surface of the active material-containing layer does not significantly affect the diffusibility of carrier ions (such as $Li^+$). Therefore, in a normal operation range set for each purpose of use of the battery, the presence of the grooves does not inhibit the input-output performance, and thus excellent input-output performance can be maintained.

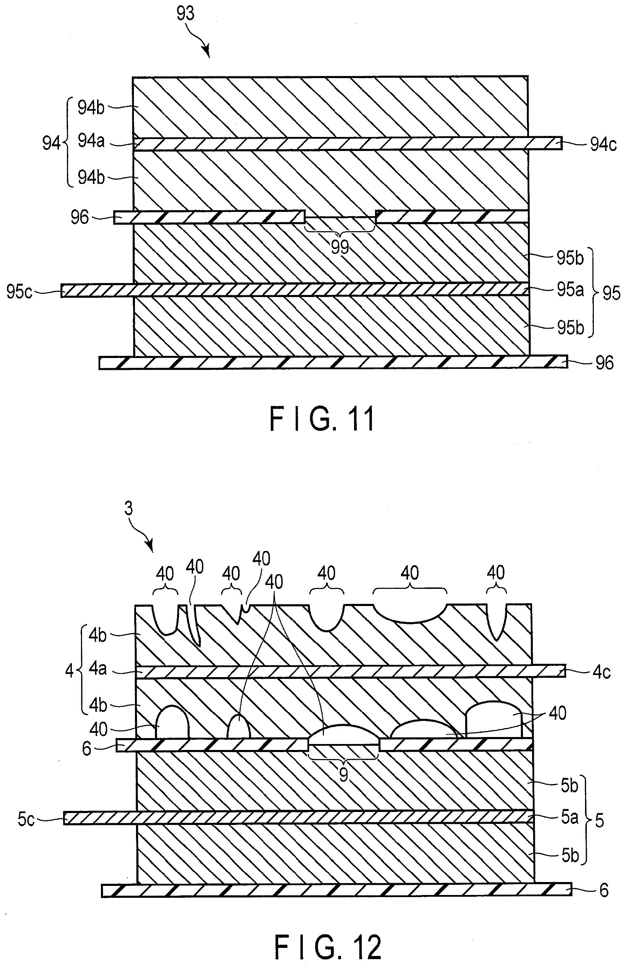

Next, reduction of an internal short circuit in an electrode group using the electrode according to the embodiment will be described with reference to FIGS. 11 and 12. FIG. 11 is a cross-sectional view schematically illustrating fracture of a separator in a conventional electrode group. FIG. 12 is a cross-sectional view schematically illustrating fracture of a separator in an example of the electrode group according to the embodiment. FIG. 12 corresponds to a cross-sectional view taken along line XII-XII' in FIG. 6, showing the case where the separator 6 of the electrode group 3 has fractured.

An electrode group 93 shown in FIG. 11 includes a positive electrode 94, a negative electrode 95, and a separator 96. The positive electrode 94 includes a band-shaped positive electrode current collector 94a, a positive electrode current collecting tab 94c formed of an end of the positive electrode current collector 94a, and a positive electrode active material-containing layer 94b formed on both surfaces of the positive electrode current collector 94a excluding the portion which is the positive electrode current collecting tab 94c. The negative electrode 95 includes a band-shaped negative electrode current collector 95a, a negative electrode current collecting tab 95c formed of an end of the negative electrode current collector 95a, and a negative electrode active material-containing layer 95b formed on the negative electrode current collector 95a excluding at least the portion which is the negative electrode current collecting tab 95c is formed.

The separator 96 is disposed in the electrode group 93 so as to interrupt electrical contact between the positive electrode 94 and the negative electrode 95; however, in the state shown in FIG. 11, the separator 96 between the positive electrode active material-containing layer 94b and the negative electrode active material-containing layer 95b has an opening 99 made due to fracture of the separator 96. A short circuit occurs between the positive electrode 94 and the negative electrode 95 due to contact between the positive electrode active material-containing layer 94b and the negative electrode active material-containing layer 95b at the opening 99.

The electrode group 3 shown in FIG. 12 includes the positive electrode 4, the negative electrode 5, and the separator 6 described with reference to FIG. 6. However, in the state shown in FIG. 12, the separator 6 between the positive electrode active material-containing layer 4b and the negative electrode active material-containing layer 5b has an opening 9 made due to fracture of the separator 6. Also, in the respective positive electrode active material-containing layers 4b provided on the principal surfaces on both sides of the positive electrode current collector 4a, multiple grooves 40 are provided on the surfaces facing in directions opposite from the contact surfaces between the positive electrode current collector 4a and the positive electrode active material-containing layers 4b, as shown in FIG. 12. The depths of the grooves 40 in the thickness direction of the positive electrode 4 are not consistent, and differ among the grooves 40.

With the multiple grooves 40 having different depths being present on the surface of the positive electrode active material-containing layer 4b, the possibility that the positive electrode 4 and the negative electrode 5 comes into contact when the separator 6 becomes fractured is reduced. If the positions of the opening 9 formed in the separator 6 and a groove 40 overlap, as shown in FIG. 12, the positive electrode active material-containing layer 4b and the negative electrode active material-containing layer 5b do not come into contact, whereby a short circuit does not occur. A portion of the positive electrode active material-containing layer 4b that does not correspond to the groove 40 may come into contact with the negative electrode active material-containing layer 5b depending on how the opening 9 is formed due to fracture of the separator 6; however, the uneven depths of the grooves can greatly reduce the possibility of contact between the positive electrode 4 and the negative electrode 5, as compared to the case where the depths of the grooves 40 are uniform. Therefore, by providing multiple grooves having uneven depths in the active material-containing layer of the electrode, the risk of an internal short circuit can be reduced to the extent possible.

Although FIG. 12 shows the configuration in which the multiple grooves 40 are provided on the surface of the positive electrode active material-containing layer 4b, similar multiple grooves may be provided on the surface of the negative electrode active material-containing layer 5b. With the multiple grooves provided on the surface of at least one of the positive electrode active material-containing layer 4b and the negative electrode active material-containing layer 5b, the above-described effects are achieved. Multiple grooves may be provided on the surfaces of both the positive electrode active material-containing layer(s) 4b and the negative electrode active material-containing layer(s) 5b.

The active material-containing layer may further contain an electro-conductive agent, a binder, or both an electro-conductive agent and a binder, in addition to the electrode active material, as described above. The active material contained in the active material-containing layer can be appropriately selected according to the design of the positive electrode and the negative electrode of the battery in which the electrode is used.

In the aspect where the electrode is a positive electrode, the positive electrode active material-containing layer may contain a positive electrode. Examples of the positive electrode active material include lithium-containing nickel-cobalt-manganese oxides (for example, a compound represented by $Li_wNi_xCo_yMn_zO_2$, where $0 < w \leq 1$, and $x + y + z = 1$, in the formula; or a compound represented by $Li_{1-s}Ni_{1-t-u-v}Co_tMn_uM1_vO_2$, where in the formula, M1 is one or more selected from the group consisting of Mg, Al, Si, Ti, Zn, Zr, Ca and Sn, and $-0.2 < s < 0.5$, $0 < t < 0.5$, $0 < u < 0.5$,

$0 \leq v < 0.1$, and $t + u + v < 1$). Otherwise, various oxides, for example, lithium-containing cobalt oxides (for example, $LiCoO_2$), manganese dioxide, lithium-manganese composite oxides (for example, $LiMn_2O_4$ and $LiMnO_2$), lithium-containing nickel oxides (for example, $LiNiO_2$), lithium-containing nickel-cobalt oxides (for example, $LiNi_{0.8}CO_{0.2}O_2$), lithium-containing iron oxides, vanadium oxides including lithium, chalcogen compounds such as titanium disulfide and molybdenum disulfide, and the like may be contained. The species of positive electrode active material may be one species or two or more species.

In the aspect where the electrode is a negative electrode, the negative electrode active material-containing layer may contain a negative electrode active material. Examples of the negative electrode active material include metals, metal alloys, metal oxides, metal sulfides, metal nitrides, graphitic materials, and carbonaceous materials.

Examples of the metals include aluminum and lithium. Examples of the metal alloys include an aluminum alloy, a magnesium alloy, and a lithium alloy. In addition to the metals, a semimetal such as silicon may be used as the negative electrode active material.

Examples of the metal oxides include oxides containing titanium. Examples of oxides containing titanium include spinel lithium titanium oxide ($Li_4Ti_5O_{12}$ and the like) monoclinic niobium-titanium composite oxide, and orthorhombic titanium-containing oxide. Other examples include metal composite oxides including Ti and at least one element selected from the group consisting of P, V, Sn, Cu, Ni, Nb and Fe. Otherwise, examples include metal oxides like amorphous tin oxides such as $SnB_{0.4}P_{0.6}O_{3.1}$, tin-silicon oxides such as $SnSiO_3$, tungsten oxides such as $WO_3$, and Si-containing oxides such as $SiO_2$.

An example of the monoclinic niobium-titanium composite oxide is a compound represented by $Li_aTi_{1-b}M1_bNb_{2-c}M2_cO_{7+\delta}$. Here, M1 is at least one selected from the group consisting of Zr, Si, and Sn. M2 is at least one selected from the group consisting of V, Ta, and Bi. The respective subscripts in the composition formula are $0 \leq a \leq 5$, $0 \leq b < 1$, $0 \leq c < 2$, and $-0.3 \leq \delta \leq 0.3$. A specific example of monoclinic niobium-titanium composite oxide is $Li_aNb_2TiO_7$ ($0 \leq a \leq 5$).

Another example of monoclinic niobium titanium composite oxide is a compound represented by $Li_aTi_{1-b}M3_{b+c}Nb_{2-c}O_{7-\delta}$. Here, M3 is at least one selected from Mg, Fe, Ni, Co, W, Ta, and Mo. The respective subscripts in the composition formula are $0 \leq a \leq 5$, $0 \leq b < 1$, $0 \leq c < 2$, and $-0.3 \leq \delta \leq 0.3$.

Examples of orthorhombic titanium-containing composite oxide include a compound represented by $Li_{2+d}M4_{2-e}Ti_{6-f}M5_gO_{14+\sigma}$. Here, M4 is at least one selected from the group consisting of Sr, Ba, Ca, Mg, Na, Cs, Rb and K. M5 is at least one selected from the group consisting of Zr, Sn, V, Nb, Ta, Mo, W, Y, Fe, Co, Cr, Mn, Ni and Al. The respective subscripts in the composition formula are, $0 \leq d \leq 6$, $0 \leq e < 2$, $0 \leq f < 6$, $0 \leq g < 6$, and $-0.5 \leq \sigma \leq 0.5$. A specific example of the orthorhombic titanium-containing composite oxide is $Li_{2+a}Na_2Ti_6O_{14}$ ($0 \leq d \leq 6$).

The metal composite oxide including Ti and at least one element selected from the group consisting of P, V, Sn, Cu, Ni, Nb and Fe may include $TiO_2$-$P_2O_5$, $TiO_2$-$V_2O_5$, $TiO_2$-$P_2O_5$-$SnO_2$, and $TiO_2$-$P_2O_5$-MeO (Me is at least one element selected from the group consisting of Cu, Ni and Fe). The metal composite oxide preferably has low crystallinity and a microstructure in which a crystal phase and an amorphous phase coexist or the amorphous phase exists alone. By having such a microstructure, the cycle performance can be significantly improved.

Examples of the metal sulfide include titanium sulfides such as $TiS_2$, molybdenum sulfides such as $MoS_2$, and iron sulfides such as FeS, $FeS_2$, and $Li_hFeS_2$ (subscript h is $0.9 \leq h \leq 1.2$).

Examples of the metal nitride include lithium nitrides such as lithium cobalt nitrides (e.g., $Li_jCo_kN$, here, $0 < j$

< 4 and 0 < k < 0.5).

Examples of the graphitic materials and the carbonaceous materials include graphite (e.g., natural graphite or artificial graphite), coke, vapor grown carbon fiber, mesophase pitch-based carbon fiber, spherical carbon, and resin-fired carbon.

Accompanying the charging and discharging of the battery, the active material included in the electrode may expand and contract. For example, in a lithium ion battery, charge and discharge proceed by Li ions moving between the positive electrode and the negative electrode, whereupon Li ions are inserted into and extracted from the electrode active material. Among active materials of the electrode, included are materials that expand and contract when carrier ions such as Li ions are inserted and extracted. In a battery using such an active material, repeating charge and discharge may promote occurrence of skewing or wrinkling of the electrode due to expansion and contraction of the active material. As a result, for example, the frequency of occurrence of self-discharge or an internal short circuit due to fracture of the separator increases.

As described above, in the battery using the electrode according to the embodiment, a short circuit is less likely to occur even when an opening due to fracture is formed in the separator. Also, currents at excessive flow amounts are suppressed even when a short circuit occurs, for example, thus ensuring safety. Accordingly, an active material that expands and contracts in accord with insertion and extraction of carrier ions can be suitably used as the active material included in the active material-containing layer. With an active material that expands and contracts to a larger extent, the effects of the multiple grooves described above are expected to be attained more greatly.

Examples of the active material having a high expansion-contraction rate associated with insertion and extraction of carrier ions include lithium-nickel-cobalt-manganese composite oxides (NCM composite oxides) having a layered halite structure. Specific examples of the composite oxides include lithium-nickel-cobalt-manganese composite oxides represented by the general formula $Li_wNi_xCo_yMn_zO_2$. The subscript w in the above general formula is in the range of "0 < w ≤ 1". The subscripts x, y, and z satisfy the relationship "x + y + z = 1". Among the NCM composite oxides, more preferable is a compound in which the stoichiometric composition ratio of nickel (Ni) is 70% to 95%. When the so-called high-nickel compound is represented by the same general formula $Li_wNi_xCo_yMn_zO_2$ as described above, the subscript w is within the range of "0 < w ≤ 1", the subscripts x, y, and z satisfy the relationship of "x + y + z = 1", and the range of the subscript x satisfies the inequality $0.7 ≤ x ≤ 0.95$.

Examples of another active material having a high degree of expansion and contraction associated with insertion and extraction of carrier ions include niobium-titanium composite oxides, carbon materials, and silicon (Si)-containing compounds. Specific examples of niobium-titanium composite oxides include compounds having a monoclinic structure and represented by the general formula $Li_aTi_{1-b}M1_bNb_{2-c}M2_cO_{7+\delta}$. In the above general formula, M1 is at least one selected from the group consisting of Zr, Si, and Sn. In the formula, M2 is at least one selected from the group consisting of V, Ta, and Bi. The subscripts satisfy the relationships of "$0 ≤ a ≤ 5$", "$0 ≤ b < 1$", "$0 ≤ c < 2$", and "$-0.3 ≤ \delta ≤ 0.3$", respectively. The active material using a carbon material may include, for example,one or more carbon material selected from the group consisting of graphite, coke, vapor grown carbon fiber, mesophase pitch-based carbon fiber, spherical carbon, and resin-fired carbon. Examples of the Si-containing compound include Si, SiO, and $SiO_2$.

The electro-conductive agent that may be included in the active material-containing layer is added to improve current collection performance of the electrode and to suppress the contact resistance between the active material and the current collector. Examples of the electro-conductive agent include acetylene black, ketjen black, furnace black, carbon black, graphite, carbon nanotube, carbon fiber, and the like. As the electro-conductive agent, one among the aforementioned materials may be selected, or two or more among the aforementioned materials may be selected. The electro-conductive agent is not limited to the aforementioned materials.

The binder that may be included in the active material-containing layer can bind the active material and the current collector. Examples of the binder include polytetrafluoroethylene (PTFE), polyvinylidene fluoride (PVdF), fluorine rubber, styrene-butadiene rubber (SBR), polypropylene (PP), polyethylene (PE), a binder having an acrylic copolymer as a main component, and carboxymethyl cellulose (CMC). As the binder, one among the aforementioned materials may be selected, or two or more among the aforementioned materials may be selected. The binder is not limited to the aforementioned materials.

In the aspect as the positive electrode, a blending proportion of the positive electrode active material, electro-conductive agent, and binder in the positive electrode active material-containing layer is preferably within ranges of 75% by mass or more and 96% by mass or less of the positive electrode active material, 3% by mass or more and 20% by mass or less of the electro-conductive agent, and 1% by mass or more and 7% by mass or less of the binder.

In the aspect as the negative electrode, the negative electrode active material, electro-conductive agent, and binder in the negative electrode active material-containing layer are preferably blended in proportions of 70% by mass or more and 96% by mass or less, 2% by mass or more and 20% by mass or less, and 2% by mass or more and 10% by mass or less, respectively. When the amount of electro-conductive agent is 2% by mass or more, the current collection performance of the negative electrode active material-containing layer can be improved. When the amount of binder is 2% by mass or more, binding between the negative electrode active material-containing layer and negative electrode current collector can be made high, and excellent cycling performances can be expected. On the other hand, an amount of each of the electro-conductive agent and binder is preferably 16% by mass or less, in view of increasing the capacity.

Foils including metals such as aluminum and copper may be used as the current collector. Examples of the foils including metals include not only metal foils but also alloy foils such as a foil made of an aluminum alloy.

<Production Method>

The electrode described above can be produced, for example, as described below.

A current collector is prepared. For example, a foil made of the above-described material can be used as the current collector.

An electrode active material, electro-conductive agent, binder, and solvent are mixed to prepare a slurry. For example, a commonly-used solvent such as N-methylpyrrolidone (NMP) may be used as the solvent. As the blending proportion of the electrode active material, electro-conductive agent, and binder in the slurry, the blending proportion of the electrode active material (positive electrode active material or negative electrode active material), electro-conductive agent, and binder described above regarding the active material-containing layer (positive electrode active material-containing layer or negative electrode active material-containing layer) can be employed.

The prepared slurry is applied onto the prepared current collector to form an active material-containing layer. The active material-containing layer may be formed on one of the surfaces of the current collector or on both of the front and back surfaces of the current collector. A current collecting tab is obtained by leaving a portion not coated with the slurry on the current collector.

A layered sheet formed of the current collector and the active material-containing layer (s) thus obtained is subjected to press molding using, for example, a roll press having multiple saw-toothed edges on the surface that comes into contact with the target to be rolled. A part of the electrode mixture (active material-containing layer, electro-conductive agent, binder, and the like) is scraped out from the surface of the active material-containing layer with the multiple saw-toothed edges, so that multiple grooves can be formed on the surface of the active material-containing layer. A roll press having multiple blades with different lengths of protrusion in the radial direction with respect to the rotation axis can be used to carve the surface of the active material-containing layer to different depths with the respective blades. That is, the multiple grooves having different depths can be formed by processing the surface of the active material-containing layer using a roll press having multiple blades with different lengths.

When rolling is performed using a roll press having multiple saw-toothed edges, the thickness of the active material-containing layer can also be adjusted. Alternatively, the thickness of the active material-containing layer may be adjusted separately from the process of carving out grooves with saw-toothed edges. For example, grooves may be formed using a roll press having saw-toothed edges after performing rolling using a roll press with no saw-toothed edges.

Then, the electrode is cut into a size according to the battery design.

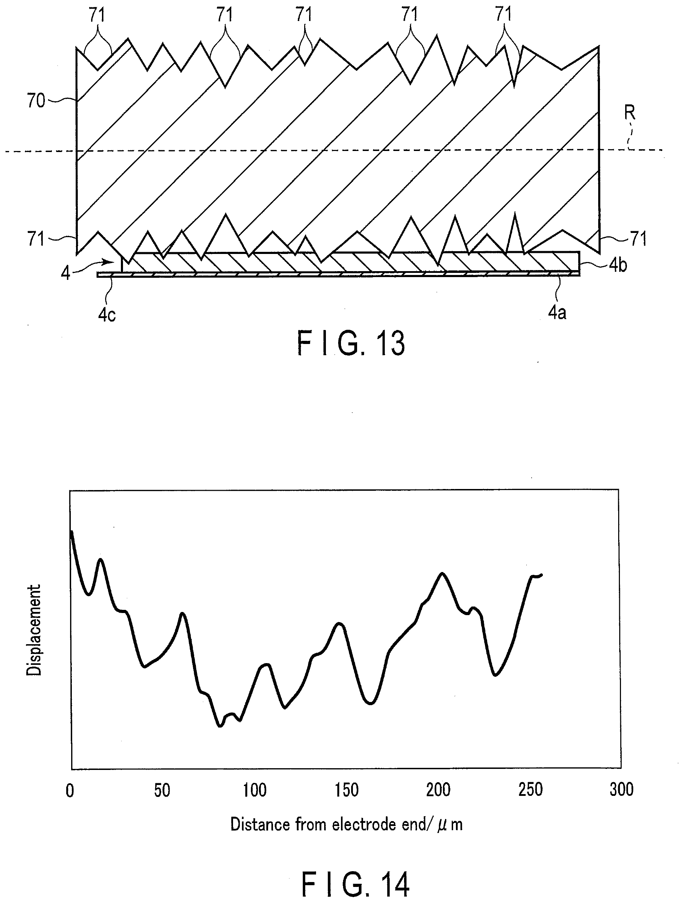

An example of forming multiple grooves using a roll press having saw-toothed edges will be described with reference to FIG. 13. FIG. 13 is a cross-sectional view schematically illustrating a part of an example production method of the electrode according to the embodiment. FIG. 13 illustrates an example of forming grooves on the surface of the active material-containing layer of the positive electrode. The same processing can be performed when producing the negative electrode.

The saw-toothed roll 70 has multiple saw teeth 71 on the lateral surface along the direction of the roll axis R. The respective saw teeth 71 protrude radially from the lateral surface of the saw-toothed roll 70, and the distances along which the respective saw teeth 71 protrude differ. The surface of the positive electrode active material-containing layer 4b of the positive electrode 4 can be carved with the saw teeth 71 on the lateral surface of the saw-toothed roll 70 to form multiple grooves. Since the saw teeth 71 dig into the positive electrode active material-containing layer 4b at different depths, multiple grooves having different depths are formed on the surface of the positive electrode active material-containing layer 4b.

In the example shown in FIG. 13, the positive electrode 4 in which the positive electrode active material-containing layer 4b is formed only on one side of the positive electrode current collector 4a is used; however, the active material-containing layer may be provided on both surfaces of the current collector. In regard to an electrode in which the active material-containing layers are provided on the principal surfaces on both the front and back sides of the current collector, multiple grooves can be formed simultaneously on the surfaces of both of the active material-containing layers by, for example, passing the electrode between two saw-toothed rolls to thereby simultaneously bring the electrode into contact with the saw teeth from above and below the active material-containing layers on each of the principal surfaces.

<Measurement Method>

Next, a method for examining the details of the electrode such as the presence or absence of grooves on the surface of the active material-containing layer will be described. When the electrode to be examined is included in a battery, the electrode is removed from the battery and subjected to pretreatment. Likewise, the separator is removed from the battery and subjected to pretreatment. For an electrode and separator incorporated in a nonaqueous electrolyte battery, for example, the pretreatment is performed by the following procedure.

First, the nonaqueous electrolyte battery is disassembled in an argon-filled glove box, and the electrode and separator to be measured are taken out from the nonaqueous electrolyte battery. Then, the taken-out electrode and separator are respectively washed, for example, with methyl ethyl carbonate (MEC). Then, the washed electrode and separator are dried in an atmosphere of 25°C and at a gauge pressure of -90 Pa. The dried electrode is subjected to each analysis explained below. Hereinafter, the electrode to be measured is simply referred to as the "electrode".

(Measurement of Thickness of Electrode)

The thickness of the electrode subjected to the pretreatment can be measured as follows. The dried electrode is measured with a digital microgauge. Among the dimensions of the electrode, nine points in the short-side direction are discretionarily selected and measured, and an average value thereof is adopted as the thickness of the electrode. For example, the direction orthogonal to the principal surface of the active material-containing layer or the current collector may be the short-side direction, that is, the thickness direction.

The presence or absence of grooves on the electrode can be determined by performing observation with a scanning

electron microscope (SEM) and measuring displacement amounts on the electrode using a laser displacement meter. Specifically, the angles of the grooves on the electrode can be measured by SEM observation, and the depths of the grooves, the widths of the grooves, and the pitch between the grooves can be estimated from the displacement amounts on the electrode.

(Measurement of Angles of Grooves on Electrode)

The angles of the grooves on the electrode can be measured with the SEM. Specifically, the electrode surface is observed with the SEM. At this time, the observation is performed with such a field of view and magnification that at least 30 grooves can be identified. More preferably, the measurement is performed at such a magnification that 100 or more grooves can be observed. A current collecting direction of the electrode is determined by specifying a direction in which current flows in the battery based on, for example, the position of the current collecting tab, the position at which the electrode terminal is connected, or the position at which the electrode lead is connected. The angle of each groove is measured as an angle with respect to the current collecting direction. At this time, the smaller angle of the intersecting angles between the direction in which the grooves extend and the current collecting direction is adopted. That is, when the current collecting direction is regarded as a flat angle, an acute angle ($0 < \theta < 90°$) and an obtuse angle ($90° < \theta' < 180°$) as a supplementary angle are formed, or two right angles ($\theta = 90°$) are formed at an intersection between the longitudinal direction of the grooves and the current collecting direction. In the former case the acute angle is examined, and in the latter case either of the right angles is observed. 30 or more grooves are observed, and the angle of each groove with respect to the current collecting direction is measured. The average value of the measured groove angles is calculated and adopted as the observed angles of the grooves of the electrode.

(Measurement of Depths, Widths, and Pitches of Grooves on Electrode)

The laser displacement meter irradiates a measurement target with a laser beam, collects light reflected from the measurement target with a light receiving lens, and forms an image on a light receiving element. When the distance between the target and a portion including a laser projector and the light receiving lens, for example, a head is changed, the angle of reflected light collected is changed, along with which the imaging position on the light receiving element is changed. The change in the distance is calculated from the change in the imaging position which is proportional to the change in the distance to the target.

The target is irradiated with a laser while moving the head of the laser displacement meter relative to the measurement target in parallel, and the laser reflected off the surface of the target is monitored. For example, the measurement is performed while moving the measurement target in the current collecting direction at a speed of 5 m/min. A phase difference between an irradiation laser and a reflection laser caused by undulation on the target surface is measured to obtain displacement amount data of the target surface.

The electrode is subjected to the measurement by a laser displacement meter in a state with tension applied thereto. By applying tension to the electrode during the measurement, it is possible to reduce influences such as deflection and unevenness from when the slurry had been applied. Preferably, the tension applied to the electrode is, for example, about 40 N/m.

A spectrum of the displacement amount is obtained by measurement and analyzed as follows. The presence or absence of the grooves, the arrangement of the grooves, and the shape of the grooves can be determined based on the spectrum. FIG. 14 shows an example of the spectrum. FIG. 14 is a graph showing a displacement amount spectrum along the current collecting direction of an example of the electrode according to the embodiment. The graph represents a spectrum obtained by measuring displacement toward the current collecting tab, starting from the opposite end of the electrode. The horizontal axis of the graph represents the distance from the electrode end on the side where the measurement is started, that is, the moving distance toward the current collecting direction. The vertical axis of the graph represents displacement with respect to a reference point.

Of the surface of the active material-containing layer (surface to be irradiated with laser light), a region where a change in displacement over a distance of 2 mm or more is less than 0.5 $\mu$m is determined as having no substantial undulation. On the other hand, when a change in the displacement within a width of 2 mm or less is 0.5 $\mu$m or more, it can be determined that the grooves are present.

The depths of the multiple grooves can be examined as follows. A spectrum measured along the current collecting direction can be used. A difference in height between the lowest position in the groove to be analyzed and the highest positions on both sides of the groove (a difference between the positions in the thickness direction of the electrode) is determined. For example, the position of the groove and the positions of the edges of the groove along the current collecting direction are determined based on positions having local minimum values and a local maximum value of displacement along the horizontal axis of the spectrum (current collecting direction), and positions having a region determined to have no substantial undulation. A maximum value of the difference in displacement between the edges on both sides of the target groove is obtained. If there is a difference in displacement between the edges on both sides, the value based on the edge having the larger difference in displacement is adopted. The maximum values are obtained for at least 30 grooves, and an average value of the obtained maximum values is calculated. The calculated average value is converted into a length to obtain an average depth ($D_{AVG}$) of the grooves.

Whether the depths of the multiple grooves on the surface of the active material-containing layer are even or uneven can be determined based on the maximum value of the difference in displacement for each groove and the average depth of the grooves obtained as described above. A distribution of the maximum value of the difference in displacement for each groove, that is, the depth of each groove, is compared with the average depth of the grooves. When the depth of each groove is distributed beyond a range above and below 10% from the average depth as a center value, the multiple grooves can be determined as having different depths, and that multiple grooves of uneven depths are formed on the surface of the active material-containing layer. When the distribution of the depths of the multiple grooves falls within the range of less than 10% above and below the center value, the depths of the respective grooves are considered to be of equal degree and uniform.

The widths and pitches of the multiple grooves can be determined based on the positions of the edges of the grooves in the current collecting direction specified based on the spectrum. The positions of the edges on both sides of each groove along the current collecting direction are specified, as described above. A distance between the positions of the edges on both sides of the target groove in the current collecting direction corresponds to the width of the groove. The widths of at least 30 or more grooves are obtained, and an average value of the obtained widths is calculated to obtain an average width of the multiple grooves . The pitches are determined as follows . A distance along the current collecting direction between edges that are closer to each other between adjacent grooves along the current collecting direction corresponds to the pitch between grooves. Pitches are obtained between at least 30 pairs of adjacent grooves, and an average value of the obtained pitches is calculated, whereby an average pitch of the multiple grooves is obtained.

(Measurement of Electrode Active Material)

The composition of the active material included in the active material-containing layer can be determined as follows. The active material-containing layer is raked off from the electrode dried in the above-described pretreatment using, for example, a spatula to obtain a powdery sample . Then, inductively coupled plasma (ICP) emission spectrometric analysis is performed to quantify the elements constituting the sample.

The electrode according to the first embodiment described above includes an active material-containing layer having multiple grooves that have depths differing from each other on a surface thereof. The multiple grooves on the surface of the active material-containing layer lie along a direction intersecting with a current collecting direction at an angle of 80° to 90°. The electrode can realize a battery having excellent input-output performance and high safety.

[Second Embodiment]

The electrode group according to the second embodiment includes a positive electrode and a negative electrode. At least one of the positive electrode and the negative electrode includes the electrode according to the first embodiment.

The electrode group may further include a separator. In the electrode group, the separator may be interposed between the positive electrode active material-containing layer of the positive electrode and the negative electrode active material-containing layer of the negative electrode.

The structure of the electrode group is not particularly limited. For example, the electrode group may have a wound structure. The wound structure is a structure obtained by winding a stack including the positive electrode and the negative electrode. Alternatively, the electrode group may have a stacked structure. The possibility that short-circuit would occur due to the electrode active material-containing layer breaking at the curved surface of the wound structure and the positive and negative electrodes coming into contact with each other is higher than that in the case of a flat structure. Therefore, inclusion of the electrode according to the first embodiment is more effective for a wound electrode group having a wound structure.

[Positive Electrode and Negative Electrode]

As the positive electrode and the negative electrode included in the electrode group, the aspect of the electrode according to the first embodiment as a positive electrode and the aspect of the electrode according to the first embodiment as a negative electrode can be adopted, respectively. Details of each of the positive electrode and the negative electrode will be omitted to avoid redundancy.

The electrode group according to the second embodiment may also include an aspect in which only one of the positive electrode or the negative electrode includes the electrode of the first embodiment, and the other of the electrodes does not include an active material-containing layer provided with multiple grooves. Since explanation except for the details of the multiple grooves would be redundant, details of the other electrode will be omitted.

[Separator]

The separator is not particularly limited and, for example, a microporous film, woven fabric, nonwoven fabric, or a laminate of the same material or different material among these materials may be used. The separator is preferably a nonwoven fabric. Examples of materials forming the separator include polyolefins like polyethylene and polypropylene, ethylene-propylene copolymer, ethylene-butene copolymer, and cellulose.

The thickness of the separator is desirably from 2 $\mu$m to 15 $\mu$m. The vacancy of the separator is desirably from 50% to 80%. A separator that is a nonwoven fabric and has a vacancy of 50% to 80% is more desirable.

A method of examining the details of the separator will be described next.

The separator included in the battery is subjected to pretreatment by the procedure described above. Hereinafter, the separator to be measured is simply referred to as a "separator" .

(Measurement of Thickness of Separator)

The thickness of the separator subjected to the pretreatment can be measured as follows. The dried separator is measured with a digital microgauge. Among the dimensions of the separator, nine points in the short-side direction are measured and an average value of the measured values is adopted as the thickness of the separator. For example, a direction orthogonal to the principal surfaces of the separator may be the short-side direction, that is, the thickness direction.

(Measurement of Vacancy of Separator)

The vacancy of the separator can be obtained, for example, by mercury porosimetry.

The measurement sample is fed into a measurement analyzer. Examples of the measuring device include AutoPore IV 9510 manufactured by Micromeritics Instruments Corporation. When performing the measurement using this device, the measurement sample subjected to the aforementioned pretreatment is cut into a size of about 50 mm to 100 mm square, and the cut piece is folded and inserted into the sample cell of this device, so that the pore diameter distribution can be measured.

The pore specific volume Vp (cm$^3$/g) is calculated from the pore diameter distribution measured under such conditions, and the vacancy $\varepsilon$ (%) is calculated by the following formula (1) or (2) based on the sample mass W (g) and the sample volume V (cm$^3$) (longitudinal $\times$ lateral $\times$ thickness).

[MATH 1]

$$\varepsilon = Vp \times W \times 1\,0\,0 \diagup V \qquad (1)$$

[MATH 2]

$$\varepsilon = \frac{100 V_P W}{V} \qquad (2)$$

Here the sample volume V (cm$^3$) is calculated from the longitudinal dimension (cm), the lateral dimension (cm), and the thickness (cm) of the sample.

The electrode group according to the second embodiment includes a positive electrode and a negative electrode, and at least one of the positive electrode and the negative electrode includes the electrode according to the first embodiment. The electrode group can realize a battery having excellent input-output performance and high safety.

[Third Embodiment]

The secondary battery according to the third embodiment includes a positive electrode and a negative electrode . At least one of the positive electrode and the negative electrode includes the electrode according to the first embodiment. The secondary battery according to the third embodiment may include the electrode group according to the second embodiment.

As the positive electrode and the negative electrode included in the battery, the mode as positive electrode and mode as negative electrode of the electrode according to the first embodiment may respectively be used. Details respectively of the positive electrode and the negative electrode will be omitted, so as to avoid redundancy.

The battery according to the third embodiment may also include an aspect in which only one of the positive electrode or the negative electrode includes the electrode of the first embodiment, and the other of the electrodes does not include an active material-containing layer provided with multiple grooves. Since explanation except for the details of the multiple grooves would be redundant, details of the other electrode will be omitted.

The battery according to the embodiment may further include an electrolyte. The electrolyte may be held, for example, in the electrode group.

The battery according to the embodiment may further include a container member that houses the electrode group and the electrolyte, for example.

The battery according to the embodiment may further include a negative electrode terminal electrically connected to the negative electrode and a positive electrode terminal electrically connected to the positive electrode. The negative electrode terminal may be connected to the negative electrode via a negative electrode lead. The positive electrode terminal may be connected to the positive electrode via a positive electrode lead. The electrode lead (positive electrode lead or negative electrode lead) may be joined to plural current collecting tabs that are bundled together.

The battery according to the embodiment may be, for example, a lithium ion secondary battery. The battery includes, for example, nonaqueous electrolyte batteries containing nonaqueous electrolyte(s) as the electrolyte.

Hereinafter, the electrolyte, the container member, the negative electrode terminal, and the positive electrode terminal will be described in detail.

[Electrolyte]

As the electrolyte, for example, a liquid nonaqueous electrolyte or gel nonaqueous electrolyte may be used. The liquid nonaqueous electrolyte is prepared by dissolving an electrolyte salt as solute in an organic solvent.

Examples of the electrolyte salt include lithium salts such as lithium perchlorate (LiClO$_4$), lithium hexafluorophosphate (LiPF$_6$), lithium tetrafluoroborate (LiBF$_4$), lithium hexafluoroarsenate (LiAsF$_6$), and lithium trifluoromethanesulfonate (LiCF$_3$SO$_3$). The electrolyte salt may be used singularly, or a mixture of two or more may be used.

The concentration of the electrolyte salt, that is the amount of dissolved electrolyte salt with respect to the organic solvent, is preferably within the range of 0.5 mol/L or more and 3 mol/L or less. When the concentration of the electrolyte salt is too low, sufficient ion conductivity may not be obtained. On the other hand, when the concentration is too high, the electrolyte salt may not be fully dissolved.

Examples of the organic solvent include ethylene carbonate (EC), propylene carbonate (PC), butylene carbonate (BC), dimethyl carbonate (DMC), diethyl carbonate (DEC), and ethyl methyl carbonate (EMC), $\gamma$-butyrolactone ($\gamma$-GBL), sulfolane (SL), acetonitrile (AN), 1,2-diemthoxy ethane, 1,3 dimethoxy propane, dimethyl ether, tetrahydrofuran (THF), and 2-methyl tetrahydrofuran (2-MeTHF). The organic solvent may be used singularly, or a mixture of two or more may be used.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions, a polymer solid electrolyte, an inorganic solid electrolyte, or the like may be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

[Container member]

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, button-shaped, and the like. The container member may be appropriately selected depending on battery size and use of the battery.

[Negative Electrode Terminal]

The negative electrode terminal may be made of a material that is electrochemically stable at the Li absorption-release potential of the abovementioned negative electrode active material, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce contact resistance between the negative electrode terminal and the negative electrode current collector.

For the negative electrode lead, a material that can be used for the negative electrode terminal may be used. In order to reduce the contact resistance, the materials of the negative electrode terminal, the negative electrode lead, and the negative electrode current collector are preferably the same.

[Positive Electrode Terminal]

The positive electrode terminal may be made of, for example, a material that is electrically stable in the potential range of 3 V to 4.5 V (vs. Li/Li$^+$) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

For the positive electrode lead, a material that can be used for the positive electrode terminal may be used. In order to reduce the contact resistance, the materials of the positive electrode terminal, the positive electrode lead, and the positive electrode current collector are preferably the same.

Next, the battery according to the embodiment will be more specifically described with reference to the drawings.

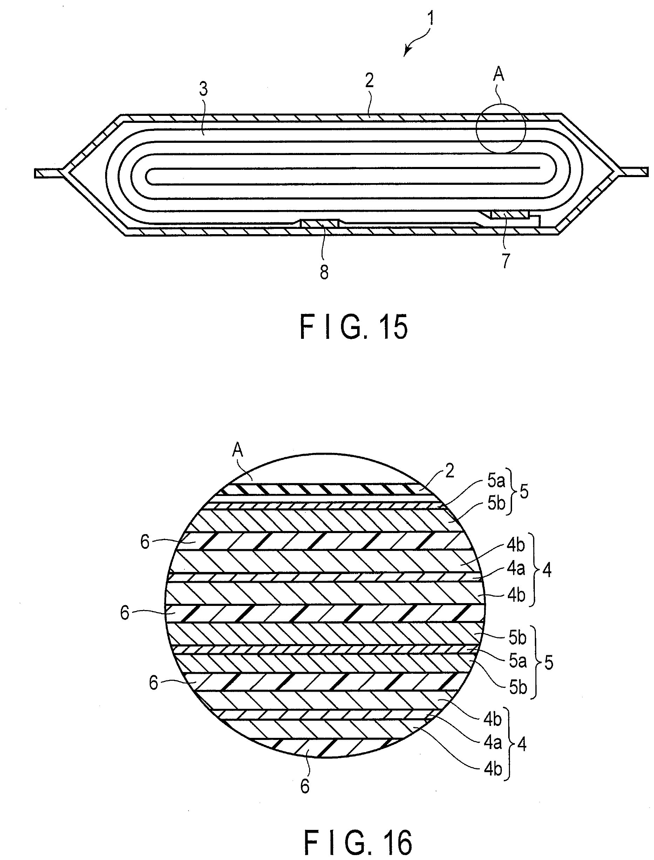

FIG. 15 is a schematic cross-sectional view of an example of a flat battery according to the embodiment. FIG. 16 is an enlarged cross-sectional view of portion A in FIG. 15.

A battery 1 shown in FIGS. 15 and 16 includes a flat-formed wound electrode group 3 shown in FIG. 15. The electrode group 3 is housed in a bag-form container member 2 made of a laminate film including a metal layer and two resin layers sandwiching the metal layer therebetween.

The electrode group 3 is formed by, spirally winding a stack where stacked, in order from the outside, are a negative electrode 5, a separator 6, a positive electrode 4, and a separator 6, as shown in FIG. 16, and then press-forming the wound stack. At a portion within the negative electrode 5 that is located outermost, a negative electrode active material-containing layer 5b that contains a negative electrode active material is formed on one face on the internal surface side of a negative electrode current collector 5a, as shown in FIG. 16. For the other portions of the negative electrode 5, negative electrode active material-containing layers 5b are formed on both of reverse surfaces of the negative electrode current collector 5a. For the positive electrode 4, positive electrode active material-containing layers 4b are formed on both of reverse surfaces of a positive electrode current collector 4a.

In vicinity of the outer peripheral edge of the wound electrode group 3, a negative electrode terminal 8 is connected to the negative electrode current collector 5a at the outermost portion of the negative electrode 5, and a positive electrode terminal 7 is connected to the positive electrode current collector 4a of the positive electrode 4 located on the inner side. The negative electrode terminal 8 and positive electrode terminal 7 are extended out from an opening of the container member 2.

The battery 1 shown in FIGS. 15 and 16 further includes an electrolyte that is not depicted. The electrolyte is housed within the container member 2 in a state of being impregnated into the electrode group 3.

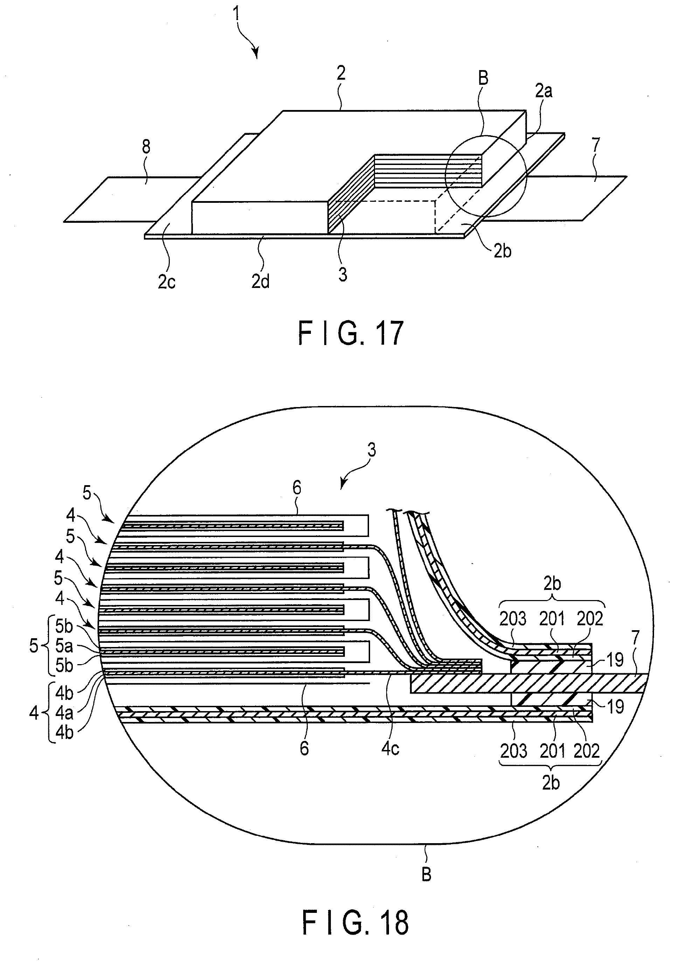

Aspects of battery according to the embodiment are not limited to that shown in FIGS. 15 and 16. Another example is described with reference to FIGS. 17 and 18.

As another example of the battery, a battery including a stacked electrode group is shown in FIGS. 17 and 18. FIG. 17 is a partially cut-out perspective view showing another example of the battery. FIG. 18 is an enlarged cross-sectional view of section B of the battery shown in FIG. 17.

The battery 1 shown in FIGS. 17 and 18 includes an electrode group 3, a container member 2, a positive electrode terminal 7, and a negative electrode terminal 8.

The electrode group 3 shown in FIGS. 17 and 18 includes plural positive electrodes 4, plural negative electrodes 5, and one separator 6.

Each positive electrode 4 includes a positive electrode current collector 4a and positive electrode active material-including layers 4b formed on both of reverse sides of the positive electrode current collector 4a, as shown in FIG. 18. As shown in FIG. 18, the positive electrode current collector 4a includes a portion where the positive electrode active material-including layers 4b are not formed on any surface thereof. This portion serves as a positive electrode current collecting tab 4c.

Each negative electrode 5 includes a negative electrode current collector 5a, and negative electrode active material-including layers 5b formed on both of reverse sides of the negative electrode current collector 5a. The negative electrode current collector 5a includes a portion where the negative electrode active material-including layers 5a are not formed on any surface thereof (not shown) . This portion serves as the negative electrode current collecting tab.

As indicated by a part thereof shown in FIG. 18, the separator 6 is folded in zigzag. In each of spaces defined by surfaces facing each other of the separator 6 folded in zigzag, each of the positive electrodes 4 and the negative electrodes 5 are arranged. Accordingly, the positive electrodes 4 and the negative electrodes 5 are stacked in such a manner that positive electrode active material-including layers 4b and negative electrode active material-including layers 5b face each other through the separator 6 sandwiched therebetween, as shown in FIG. 18. Thus, the electrode group 3 is formed.

The positive electrode current collecting tabs 4c of the electrode group 3 extend further out than the ends of each of the positive electrode active material-containing layers 4b and the negative electrode active material-containing layers 5b, as shown in FIG. 18. The positive electrode current collecting tabs 4c are collected together into one, and connected to the positive electrode terminal 7, as shown in FIG. 18. Although not shown, the negative electrode current collecting tabs of the electrode group 3 also extend further out than the other ends of each of the positive electrode active material-containing layers 4b and the negative electrode active material-containing layers 5b. Although not shown, the negative electrode current collecting tabs are collected together into one, and connected to the negative electrode terminal 8 shown in FIG. 17.

Such an electrode group 3 is housed in a container member 2 made of laminate film, as shown in FIGS. 17 and 18.

The container member 2 is formed of an aluminum-containing laminate film including an aluminum foil 201 and resin films 202 and 203 formed on the both sides thereof. The aluminum-containing laminate film forming the container member 2 is folded with a fold section 2d as the fold so that the resin film 202 faces inward, and houses the electrode group 3. As shown in FIGS. 17 and 18, portions of the resin films 202 facing each other sandwich the positive electrode terminal 7 therebetween, at the periphery 2b of the container member 2. Similarly, portions of the resin films 202 facing each other sandwich the negative electrode current terminal 8 therebetween, at the periphery 2c of the container member 2. The positive electrode terminal 7 and the negative electrode terminal 8 extend out from the container member 2 in opposite directions to each other.

Portions of the resin films 202 facing each other are thermally fused at the peripheries 2a, 2b and 2c of the container member 2, except at portions where the positive electrode terminal 7 and the negative electrode terminal 8 are sandwiched therebetween.

In the battery 1, in order to improve bonding strength between the positive electrode terminal 7 and the resin films 202, insulating films 19 are provided between the positive electrode terminal 7 and the resin films 202, as shown in FIG. 18 . In the periphery 2b, the positive electrode terminal 7 and insulating films 19 are thermally fused, and the resin films 202 and the insulating films 19 are thermally fused. Similarly, although not shown, insulating films 19 are also provided between the negative electrode terminal 8 and the resin films 202. In the periphery 2c, the negative electrode terminal 8 and the insulating films 19 are thermally fused, and the resin films 202 and the insulating films 19 are thermally fused. Namely, in the battery 1 shown in FIG. 17, all of the peripheries 2a, 2b and 2c of the container member 2 are heat-sealed.

The container member 2 further houses an electrolyte, which is not shown. The electrolyte may be impregnated into the electrode group 3.

In the battery 1 shown in FIGS. 17 and 18, the plural positive electrode current collecting tabs 4c are collected together at the undermost layer of the electrode group 3, as shown in FIG. 18. Similarly, although not shown, the plural negative electrode current collecting tabs are collected together at the undermost layer of the electrode group 3. The plural positive electrode current collecting tabs 4c and the plural negative electrode current collecting tabs 5c may, however, be respectively collected together into one near a middle section of the electrode group 3, and connected to the positive electrode terminal 7 and the negative electrode terminal 8, respectively, for example.

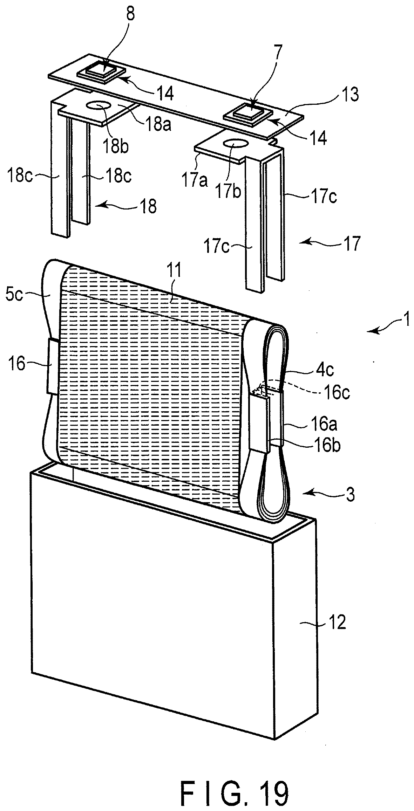

FIG. 19 is an exploded perspective view schematically showing still another example of the battery according to the embodiment.

A battery 1 includes: a metallic prismatic container member 12 having an opening, a lid (sealing plate) 13 welded to the opening of the prismatic container member 12, a flat wound electrode group 3 housed in the prismatic container member 12, and an electrolyte (not shown) housed in the prismatic container member 12 and impregnated in the electrode group 3.

The wound electrode group 3 includes a band-shaped positive electrode 4 having a pair of long sides and a band-shaped negative electrode 5 having a pair of long sides. In a manner similar to the electrode group 3 in the battery described with reference to FIGS. 15 and 16, the positive electrode 4 and the negative electrode 5 are wound with the band-shaped separator 6 having a pair of long sides interposed therebetween. The positive electrode 4, the negative electrode 5, and the separator 6 are wound with the long sides thereof aligned with each other.

The positive electrode 4 includes a positive electrode current collector 4a and positive electrode active material-containing layer (s) 4b supported on the surface (s) of the positive electrode current collector 4a. In a manner similar to the electrode group 3 shown in FIG. 6, the positive electrode current collector 4a includes a positive electrode current collecting tab 4c corresponding to a band-shaped portion in which the positive electrode active material-containing layer(s) 4b is not supported on a surface thereof.

The negative electrode 5 includes a negative electrode current collector 5a and negative electrode active material-containing layer (s) 5b supported on the surface (s) of the negative electrode current collector 5a. In a manner similar to the electrode group 3 shown in FIG. 6, the negative electrode current collector 5a includes a negative electrode current collecting tab 5c corresponding to a band-shaped portion in which the negative electrode active material-containing layer(s) 5b is not supported on a surface thereof. In the electrode group 3, the positive electrode current collecting tab 4c wound spirally protrudes from one end face, and the negative electrode current collecting tab 5c wound spirally protrudes from the other end face, as shown in FIG. 19.

As shown in FIG. 19, the electrode group 3 includes two pinching members 16. The pinching member 16 includes a first pinching section 16a, a second pinching section 16b, and a joint 16c joining the first and second pinching sections 16a and 16b. Since the positive electrode current collecting tab 4c and the negative electrode current collecting tab 5c are wound into a flat shape, a space is created in the center of winding. Of this space, the space inside the positive electrode current collecting tab 4c has the joint 16c of one of the pinching members 16 arranged therein, and the space inside the negative electrode current collecting tab 4c has the joint 16c of the other of the pinching members 16 is arranged therein. With such an arrangement, a part of each of the positive electrode current collecting tab 4c and the negative electrode current collecting tab 5c is held by the first pinching section 16a, and another part of each of the positive electrode current collecting tab 4c and the negative electrode current collecting tab 5c facing the aforementioned part across the space inside the positive electrode current collecting tab 4c or the negative electrode current collecting tab 5c is held by the second pinching section 16b, with the joint 16c arranged therebetween.

A part of the outermost lap of the electrode group 3 excluding the positive electrode current collecting tab 4c and the negative electrode current collecting tab 5c is covered with an insulating tape 11.

The lid 13' has a rectangular shape. The lid 13 has two through-holes (not shown) . An inlet (not shown) for putting in, for example, a liquid electrolyte is further opened in the lid 13. After the electrolyte is put in, the inlet is sealed by a sealing lid (not shown).

The battery shown in FIG. 19 further includes a positive electrode lead 17, a positive electrode terminal 7, a negative electrode lead 18, and a negative electrode terminal 8.

The positive electrode lead 17 includes a connection plate 17a for electrically connecting to the positive electrode terminal 7, a through-hole 17b opened in the connection plate 17a, and strip-shaped current collecting parts 17c branched out in two prongs from the connection plate 17a and extending downward. The two current collecting parts 17c of the positive electrode lead 17 holds the positive electrode current collecting tab 4c and the pinching member 16 that holds the positive electrode current collecting tab 4c therebetween, and are electrically connected to the pinching member 16 by welding.

The negative electrode lead 18 includes a connection plate 18a for electrically connecting to the negative electrode terminal 8, a through-hole 18b opened in the connection plate 18a, and strip-shaped current collecting parts 18c branched out in two prongs from the connection plate 18a and extending downward. The two current collecting parts 18c of the negative electrode lead 18 holds the negative electrode current collecting tab 5c and the pinching member 16 that holds the negative electrode current collecting tab 5c therebetween, and are electrically connected to the negative electrode current collecting tab 5c by welding.

Methods for electrically connecting the positive electrode lead 17 and the negative electrode lead 18 to the positive electrode current collecting tab 4c and the negative electrode current collecting tab 5c, respectively, include, but are not particularly limited to, welding such as ultrasonic welding or laser welding.

The positive electrode terminal 7 and the positive electrode lead 17 are fixed to the lid 13 by swaging via an external insulating member 14 and an internal insulating member that is not shown. With such an arrangement, the positive electrode terminal 7 and the positive electrode lead 17 are electrically connected to each other and electrically insulated from the lid 13. The negative electrode terminal 8 and the negative electrode lead 18 are fixed to the lid 13 by swaging via the external insulating member 14 and an internal insulating member that is not shown. With such an arrangement, the negative electrode terminal 8 and the negative electrode lead 18 are electrically connected to each other and electrically insulated from the lid 13.

The battery according to the third embodiment includes the electrode according to the first embodiment. Therefore, the battery is excellent in input-output performance has high safety.

[Fourth Embodiment]

According to a fourth embodiment, a battery pack is provided. This battery pack includes the battery according to the third embodiment.

The battery pack according to the embodiment may include plural batteries. The plural batteries may be electrically connected in series or electrically connected in parallel. Alternatively, the plural batteries may be connected in a combination of in-series and in-parallel.

For example, the battery pack may be provided with five nonaqueous electrolyte batteries according to the third embodiment. These batteries may be connected in series. The batteries connected in series may be configured into a battery module. That is, the battery pack according to the embodiment may include a battery module, also.

The battery pack according to the embodiment may include plural battery modules. The plural battery modules may be electrically connected in series, in parallel, or in combination of in-series and in-parallel.

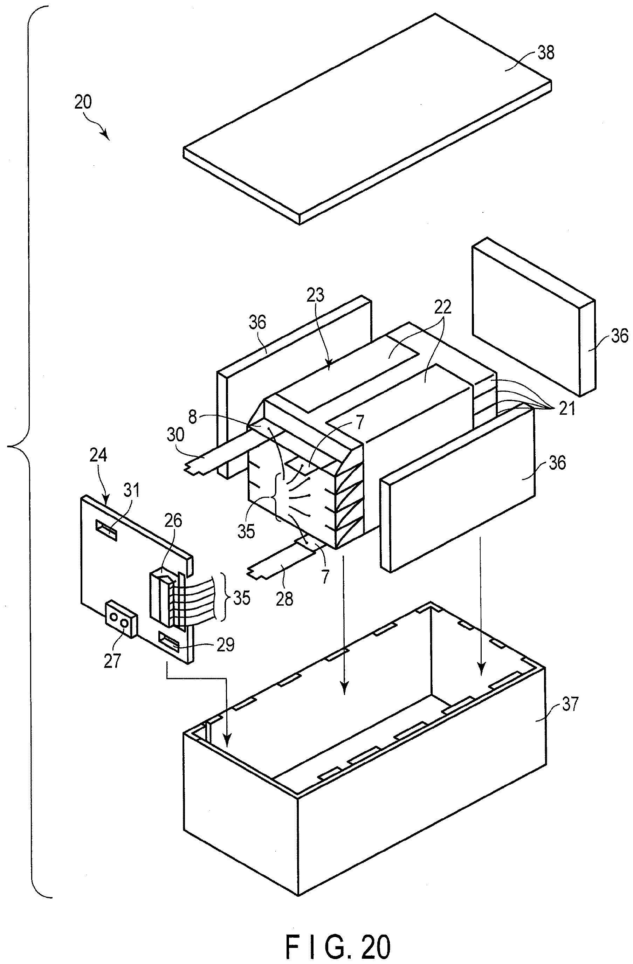

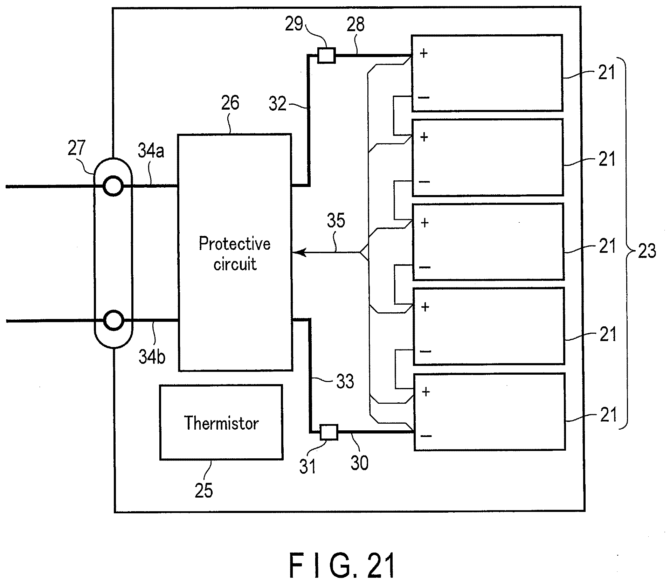

Hereinafter, an example of the battery pack according to the embodiment will be described in detail with reference to FIGS. 20 and 21. As a single-battery, for example, the flat battery shown in FIG. 15 may be used.

FIG. 20 is an exploded perspective view schematically showing an example of the battery pack according to the embodiment. FIG. 21 is a block diagram showing an example of an electric circuit of the battery pack shown in FIG. 20.

The plural single-batteries 21 configured of the aforementioned flat batteries are stacked in such manner that the externally extending negative electrode terminals 8 and positive electrode terminals 7 are aligned in the same direction, and are fastened with an adhesive tape 22 to configure a battery module 23. These single-batteries 21 are electrically connected in series to each other as shown in FIG. 21.

A printed wiring board 24 is disposed facing the side surface of the single-battery 21 from which the negative electrode terminals 8 and the positive electrode terminals 7 extend. As shown in FIG. 21, mounted on the printed wiring board 24 are a thermistor 25, a protective circuit 26, and an external power distribution terminal 27. Note that an insulating plate (not shown) is attached to the surface of the printed wiring board 24 facing the battery module 23 so as to avoid unnecessary connection with the wiring of the battery module 23.

A positive electrode-side lead 28 is connected to the positive electrode terminal 7 located lowermost in the battery module 23, and a distal end thereof is inserted into a positive electrode-side connector 29 of the printed wiring board 24 and electrically connected thereto. A negative electrode-side lead 30 is connected to the negative electrode terminal 8 located uppermost in the battery module 23, and a distal end thereof is inserted into the negative electrode-side connector 31 of the printed wiring board 24 and electrically connected thereto. These connectors 29 and 31 are connected to the protective circuit 26 through wiring 32 and wiring 33 formed on the printed wiring board 24.

The thermistor 25 detects the temperature of the single-batteries 21, and the detection signal is transmitted to the protective circuit 26. The protective circuit 26 can shut off a plus-side wiring 34a and a minus-side wiring 34b between the protective circuit 26 and the external power distribution terminal 27 under a predetermined condition. A predetermined condition is, for example, when the temperature detected by the thermistor 25 becomes a predetermined temperature or higher. The predetermined condition is also when overcharge, over-discharge, overcurrent, or the like of the single-battery(s) 21 is detected. Detection of this overcharge or the like is performed for each of the individual single-batteries 21 or the entire battery module 23. In the case of detecting each single-battery 21, a battery voltage may be detected, or a positive electrode potential or a negative electrode potential may be detected. In the latter case, a lithium electrode used as a reference electrode is inserted into each single-battery 21. In the case of FIG. 20 and FIG. 21, wiring 35 for voltage detection is connected to each of the single-batteries 21. Detection signals are transmitted to the protective circuit 26 through the wirings 35.

Protective sheets 36 made of rubber or resin are respectively arranged on three side surfaces of the battery module 23 excluding the side surface from which the positive electrode terminal 7 and the negative electrode terminal 8 protrude.

The battery module 23 is housed in a housing container 37 together with each protective sheet 36 and the printed wiring board 24. That is, the protective sheets 36 are disposed in the housing container 37 respectively on both inner side surfaces along a long-side direction and the inner side surface along a short-side direction, and the printed wiring board 24 is disposed on the inner side surface at the opposite side along the short-side direction. The battery module 23 is located in a space surrounded by the protective sheets 36 and the printed wiring board 24. A lid 38 is attached to the upper surface of the housing container 37.

For fixing the battery module 23, a thermal shrinkage tape may be used in place of the adhesive tape 22. In this case, the protective sheets are disposed on each side surface of the battery module, a thermal shrinkage tape is wound, and thereafter, the thermal shrinkage tape is thermally shrunk to bind the battery module.

In FIGS. 20 and 21, an aspect where the single-batteries 21 are connected in series was shown; however, the connection may be made in parallel in order to increase the battery capacity. Assembled battery packs may also be connected in series and/or parallel.

The battery pack according to the fourth embodiment includes the battery according to the third embodiment. Therefore, excellent input-output performance and high safety are exhibited.

[Examples]

Hereinafter, examples will be described.

<Production of Nonaqueous Electrolyte Battery>

(Example 1)

(Production of Positive Electrode)

As active material, lithium-containing nickel-cobalt-manganese composite oxide $LiNi_{0.6}Co_{0.2}Mn_{0.2}O_2$ formed of secondary particles was prepared. The average secondary particle size of the prepared active material was 7 $\mu$m, while the average primary particle size was 1.0 $\mu$m. Acetylene black as electro-conductive agent and polyvinylidene fluoride as binder were prepared. The active material, electro-conductive agent, and binder were dissolved and mixed in N-methylpyrrolidone (NMP) at a weight ratio of 90:5:5, to prepare a paste.

The paste-form dispersion liquid was uniformly applied as a positive electrode coating liquid onto both front and back surfaces of a current collector made of a band-shaped aluminum foil. The thickness of the aluminum foil was 15 $\mu$m. The coating films of the positive electrode coating liquid were dried to form positive electrode active material-containing layers. Press rolls having multiple saw-toothed edges with uneven lengths attached to their pressing surfaces were used to press-mold the dried band-shaped object. The electrode was passed between the rolls provided with saw teeth, thereby rolling the electrode so as to carve the surfaces of the electrode mixture layers (active material-containing layers) with the saw teeth. During rolling, the pressure of press was adjusted so that the electrode thickness was 40 $\mu$m. The rolled electrode was cut into a predetermined size. A current collecting tab was welded thereto to obtain a positive electrode. When cutting the electrode and welding the current collecting tab, the cutting position and the welding position were adjusted so that the angle of the direction along which each of the grooves formed during rolling lie was 80° with respect to the current collecting direction.

(Production of Negative Electrode)

Lithium titanate having a spinel structure $Li_4Ti_5O_{12}$ as negative electrode active material, graphite as electro-conductive agent, and polyvinylidene fluoride as binder were prepared. The negative electrode active material, electro-conductive agent, and binder were dissolved in NMP and mixed at a weight ratio of 90:5:5 to prepare a paste. This paste was uniformly applied onto both front and back surfaces of a negative electrode current collector formed of a band-shaped aluminum foil, as a negative electrode coating fluid. The thickness of the aluminum foil was 15 $\mu$m. The negative electrode coating fluid was dried to form negative electrode active material-containing layers. A band-shaped object obtained after drying was press-molded, and thereafter the band-shaped object was cut to predetermined dimensions. Adjustments were made so as to make the electrode thickness be 50 pm. A current collecting tab was welded thereto to obtain a negative electrode.

(Production of Electrode Group)

A nonwoven fabric separator made of cellulose was prepared. The thickness of the separator was 20 $\mu$m. The vacancy of the separator was 60%. Next, the positive electrode, the negative electrode, and the separator were stacked in the order of the separator, the positive electrode, the separator, and the negative electrode to form a stack. The positive electrode, the negative electrode, and the separator were continuously stacked multiple times in this order, to obtain a stack in which the separator was positioned in the outermost layer. Then, the obtained stack was pressed while being heated. A stacked electrode group was thus produced.

(Preparation of Nonaqueous Electrolyte)

As a nonaqueous solvent, a mixed solvent in which ethylene carbonate and propylene carbonate were mixed at a volume ratio of 1:2 was prepared. $LiPF_6$ as an electrolyte salt was dissolved in this mixed solvent at 1.0 mol/L to prepare a nonaqueous electrolyte.

(Assembly of Battery)

Electrode terminals were electrically connected to current collecting tabs respectively of the positive electrode and the negative electrode of the stacked electrode group obtained as described above. The electrode group was housed in a prismatic container having a flat shape made of aluminum. Here a container having the same shape as the prismatic container member 12 shown in FIG. 19 was used. The aforementioned nonaqueous electrolyte was put into the container, and a nonaqueous electrolyte battery was obtained by sealing the container. For the design of the battery, used was a design with which the nominal capacity was 15 Ah.

(Example 2)

The separator was changed to a cellulose nonwoven fabric separator having a thickness of 15 $\mu$m. A battery was produced by the same method as with Example 1 except for this change.

(Example 3)

When producing the positive electrode, the cutting position after rolling and the welding position of the current collecting tab were adjusted so that the angle of the direction along which each of the grooves formed during rolling lie was 85° with respect to the current collecting direction. A battery was produced by the same method as with Example 1 except for this change.

(Example 4)

The same positive electrode and negative electrode as those produced in Example 1 were produced. Two separators that were the same as that used in Example 1 were prepared. Next, one of the separators, the positive electrode, the other of the separators, and the negative electrode were stacked in this order to form a stack. Then, the obtained stack was spirally wound in such a manner that a separator was positioned outermost. Then, after the winding core was removed, the wound object was pressed while being heated. A wound electrode group was thus produced.

A battery was produced by the same method as with Example 1 except that this wound electrode group was used in place of the stacked electrode group.

(Example 5)

The same positive electrode as that produced in Example 3, in which the direction along which each of the grooves formed during rolling lie crossed the current collecting direction at 85°, was produced. A battery including a wound electrode group was produced by the same method as with Example 4 except that this positive electrode was used.

(Example 6)

As active material, lithium-containing manganese composite oxide $LiMnO_2$ formed of secondary particles was prepared. The average secondary particle size of the prepared active material was 7 $\mu$m, while the average primary particle size was 1.0 $\mu$m. Acetylene black as electro-conductive agent and polyvinylidene fluoride as binder were prepared. The active material, electro-conductive agent, and binder were dissolved and mixed in N-methylpyrrolidone (NMP) at a weight ratio of 90:5:5, to prepare a paste.

The paste-form dispersion liquid was uniformly applied as a positive electrode coating liquid onto both front and back surfaces of a current collector made of a band-shaped aluminum foil. The thickness of the aluminum foil was 15 $\mu$m. The coating films of the positive electrode coating liquid were dried to form positive electrode active material-containing layers. Press rolls having multiple saw-toothed edges with uneven lengths attached to their pressing surfaces were used to press-mold the dried band-shaped object. The electrode was passed between the rolls provided with saw teeth, thereby rolling the electrode so as to carve the surfaces of the electrode mixture layers (active material-containing layers) with the saw teeth. During rolling, the pressure of press was adjusted so that the electrode thickness was 65 $\mu$m. The rolled electrode was cut into a predetermined size. A current collecting tab was welded thereto to obtain a positive electrode. When cutting the electrode and welding the current collecting tab, the cutting position and the welding position were adjusted so that the angle of the direction along which each of the grooves formed during rolling lie was 80° with respect to the current collecting direction.

A battery was produced by the same method as with Example 1 except that this positive electrode was used.

(Example 7)

As active material, lithium-containing cobalt composite oxide $LiCoO_2$ formed of secondary particles was prepared. The average secondary particle size of the prepared active material was 7 $\mu$m, while the average primary particle size was 1.0 $\mu$m. Acetylene black as electro-conductive agent and polyvinylidene fluoride as binder were prepared. The active material, electro-conductive agent, and binder were dissolved and mixed in N-methylpyrrolidone (NMP) at a weight ratio of 90:5:5, to prepare a paste.

The paste-form dispersion liquid was uniformly applied as a positive electrode coating liquid onto both front and back surfaces of a current collector made of a band-shaped aluminum foil. The thickness of the aluminum foil was 15 $\mu$m. The coating films of the positive electrode coating liquid were dried to form positive electrode active material-containing layers. Press rolls having multiple saw-toothed edges with uneven lengths attached to their pressing surfaces were used to press-mold the dried band-shaped object. The electrode was passed between the rolls provided with saw teeth, thereby rolling the electrode so as to carve the surfaces of the electrode mixture layers (active material-containing layers) with the saw teeth. During rolling, the pressure of press was adjusted so that the electrode thickness was 55 $\mu$m. The rolled electrode was cut into a predetermined size. A current collecting tab was welded thereto to obtain a positive electrode . When cutting the electrode and welding the current collecting tab, the cutting position and the welding position were adjusted so that the angle of the direction along which each of the grooves formed during rolling lie was 80° with respect to the current collecting direction.

A battery was produced by the same method as with Example 1 except that this positive electrode was used.

(Example 8)

When producing the positive electrode, press-molding was performed without attaching saw-tooth edges to the press rolls. Adjustments were made so as to make the electrode thickness be 50 $\mu$m. A positive electrode was produced by the same method as with Example 1 except that the saw teeth were not used.

Niobium-titanium oxide $Nb_2TiO_7$ as negative electrode active material, graphite as electro-conductive agent, polyvinylidene fluoride as binder were prepared. The negative electrode active material, electro-conductive agent, and binder were dissolved in NMP and mixed at a weight ratio of 90:5:5 to prepare a paste. This paste was uniformly applied onto both front and back surfaces of a negative electrode current collector formed of a band-shaped aluminum foil, as a negative electrode coating fluid. The thickness of the aluminum foil was 15 $\mu$m. The negative electrode coating fluid was dried to form negative electrode active material-containing layers. When press-molding the dried band-shaped object, press rolls having multiple saw-toothed edges with uneven lengths attached to their pressing surfaces were used. The electrode was passed between the rolls provided with saw teeth, thereby rolling the electrode so as to carve the surfaces of the electrode mixture layers (active material-containing layers) with the saw teeth. During rolling, the pressure of press was adjusted so that the electrode thickness was 40 μm. The rolled electrode was cut into a predetermined size. A current collecting tab was welded thereto to obtain a positive electrode. When cutting the electrode and welding the current collecting tab, the cutting position and the welding position were adjusted so that the angle of the direction along which each of the grooves formed during rolling lie was 80° with respect to the current collecting direction.

A battery was produced by the same method as with Example 1 except that these positive electrode and negative electrode were used.

(Example 9)

The same positive electrode as that produced in Example 8, which was press-molded without using a saw-toothed roll, was produced.

MCF (mesophase pitch-based carbon fiber) as negative electrode active material, graphite as electro-conductive agent, SBR (styrene-butadiene rubber) as binder, and CMC (carboxymethyl cellulose) as thickener were prepared. The negative electrode active material, electro-conductive agent, binder, and thickener were dissolved in water and mixed at a weight ratio of 85:10:3:2 to prepare a paste. This paste was uniformly applied onto both front and back surfaces of a negative electrode current collector formed of a band-shaped copper foil, as a negative electrode coating fluid. The thickness of the copper foil was 15 μm. The negative electrode coating fluid was dried to form negative electrode active material-containing layers. When press-molding the dried band-shaped object, press rolls having multiple saw-toothed edges with uneven lengths attached to their pressing surfaces were used. The electrode was passed between the rolls provided with saw teeth, thereby rolling the electrode so as to carve the surfaces of the electrode mixture layers (active material-containing layers) with the saw teeth. During rolling, the pressure of press was adjusted so that the electrode thickness was 35 μm. The rolled electrode was cut into a predetermined size. A current collecting tab was welded thereto to obtain a positive electrode. When cutting the electrode and welding the current collecting tab, the cutting position and the welding position were adjusted so that the angle of the direction along which each of the grooves formed during rolling lie was 80° with respect to the current collecting direction.

A battery was produced by the same method as with Example 1 except that these positive electrode and negative electrode were used.

(Example 10)

The same positive electrode as that produced in Example 8, which was press-molded without using a saw-toothed roll, was produced.

$SiO_2$ as negative electrode active material, graphite as electro-conductive agent, SBR (styrene-butadiene rubber) as binder, and CMC (carboxymethyl cellulose) as thickener were prepared. The negative electrode active material, electro-conductive agent, binder, and thickener were dissolved in water and mixed at a weight ratio of 85:10:6:4 to prepare a paste. This paste was uniformly applied onto both front and back surfaces of a negative electrode current collector formed of a band-shaped copper foil, as a negative electrode coating fluid. The thickness of the copper foil was 15 μm. The negative electrode coating fluid was dried to form negative electrode active material-containing layers. When press-molding the dried band-shaped object, press rolls having multiple saw-toothed edges with uneven lengths attached to their pressing surfaces were used. The electrode was passed between the rolls provided with saw teeth, thereby rolling the electrode so as to carve the surfaces of the electrode mixture layers (active material-containing layers) with the saw teeth. During rolling, the pressure of press was adjusted so that the electrode thickness was 30 μm. The rolled electrode was cut into a predetermined size. A current collecting tab was welded thereto to obtain a positive electrode. When cutting the electrode and welding the current collecting tab, the cutting position and the welding position were adjusted so that the angle of the direction along which each of the grooves formed during rolling lie was 80° with respect to the current collecting direction.

A battery was produced by the same method as with Example 1 except that these positive electrode and negative electrode were used.

(Example 11)

As active material, lithium-containing nickel-cobalt-manganese composite oxide $LiNi_{0.8}Co_{0.1}MN_{0.1}O_2$ formed of secondary particles was prepared. The average secondary particle size of the prepared active material was 12 μm, while the average primary particle size was 0.5 μm. Except that this active material was used in place of

$LiNi_{0.6}CO_{0.2}Mn_{0.2}O_2$ a positive electrode coating liquid was prepared by the same method as with Example 1. Upon press-molding using the saw-toothed rolls, the pressure of press was adjusted so that the electrode thickness was 35 $\mu$m. A positive electrode was produced by the same method as with Example 1 except for these changes.

A battery was produced by the same method as with Example 1 except that this positive electrode was used.

(Example 12)

When producing the positive electrode, saw teeth each having a shorter tooth length in the radiating direction from the roll axis than the saw teeth attached to the press rolls in Example 1 were used instead. The teeth lengths were shorter overall, but the lengths of the saw teeth differed from each other and were not even. Press-molding was performed using press rolls with short, uneven saw teeth attached thereto. At this time, the electrode thickness was adjusted to 40 $\mu$m. A battery was produced by the same method as with Example 1 except for these changes.

(Example 13)

When producing the positive electrode, saw teeth each having a longer tooth length in the radiating direction from the roll axis than the saw teeth attached to the press rolls in Example 1 were used instead. The teeth lengths were longer overall, and the lengths of the saw teeth differed from each other and were not even. Press-molding was performed using press rolls with long, uneven saw teeth attached thereto. At this time, the electrode thickness was adjusted to 40 $\mu$m. A battery was produced by the same method as with Example 1 except for these changes.

(Example 14)

When producing the positive electrode, saw teeth each having a thinner thickness and a shorter width in the direction along the roll axis than the saw teeth attached to the press rolls in Example 1 were used instead. Press-molding was performed using press rolls with thin, uneven saw teeth attached thereto. At this time, the electrode thickness was adjusted to 40 $\mu$m. A battery was produced by the same method as with Example 1 except for these changes.

(Example 15)

When producing the positive electrode, saw teeth each having a thicker thickness and a longer width in the direction along the roll axis than the saw teeth attached to the press rolls in Example 1 were used instead. Press-molding was performed using press rolls with thick, uneven saw teeth attached thereto. At this time, the electrode thickness was adjusted to 40 $\mu$m. A battery was produced by the same method as with Example 1 except for these changes.

(Example 16)

When producing the positive electrode, saw teeth arranged at narrower intervals in the direction along the roll axis than the saw teeth attached to the press rolls in Example 1 were used instead. Press-molding was performed using press rolls with dense, uneven saw teeth attached thereto. At this time, the electrode thickness was adjusted to 40 $\mu$m. A battery was produced by the same method as with Example 1 except for these changes.

(Example 17)

When producing the positive electrode, saw teeth arranged at wider intervals in the direction along the roll axis than the saw teeth attached to the press rolls in Example 1 were used instead. Press-molding was performed using press rolls with sparse, uneven saw teeth attached thereto. At this time, the electrode thickness was adjusted to 40 $\mu$m. A battery was produced by the same method as with Example 1 except for these changes.

(Comparative Example 1)

When producing a positive electrode, saw teeth having even teeth lengths in the radial direction from the roll axis were used instead of saw teeth having uneven teeth lengths. Press-molding was performed using press rolls with saw teeth having even blade lengths attached thereto. At this time, the electrode thickness was adjusted to 40 $\mu$m. A battery was produced by the same method as with Example 1 except for these changes.

(Comparative Example 2)

The separator was changed to a cellulose nonwoven fabric separator having a thickness of 15 $\mu$m. A battery was produced by the same method as with Comparative Example 1 except for this change.

(Comparative Example 3)

When producing the positive electrode, the cutting position after rolling and the welding position of the current collecting tab were adjusted so that the angle of the direction along which each of the grooves formed during rolling lie was 10° with respect to the current collecting direction. A battery was produced by the same method as with Example 1 except for these changes.

(Comparative Example 4)

The same positive electrode as that produced in Comparative Example 1, which was press-molded with press-rolls provided with saw teeth whose teeth lengths were uniform, was produced.
Two separators made of polyethylene resin were prepared. The thickness of both separators was 20 $\mu$m. The vacancy of both separators was 50%. Next, one of the separators, the positive electrode, the other of the separators, and the negative electrode were stacked in this order to form a stack. Then, the obtained stack was spirally wound in such a manner that a separator was positioned outermost. Then, after the winding core was removed, the wound object was pressed while being heated. A wound electrode group was thus produced.
A battery was produced by the same method as with Comparative Example 1 except that this wound electrode group was used in place of the stacked electrode group.

(Comparative Example 5)

When producing the positive electrode, press-molding was performed using the same press rolls as those in Comparative Example 1, with saw teeth having even teeth lengths attached thereto. At this time, the electrode thickness was adjusted to 40 $\mu$m. The cutting position after rolling and the welding position of the current collecting tab were adjusted so that the angle of the direction along which each of the grooves formed during rolling lie was 85° with respect to the current collecting direction, and a positive electrode was produced.
Two of the same separators as those used in Comparative Example 4 were prepared. Next, one of the separators, the positive electrode, the other of the separators, and the negative electrode were stacked in this order to form a stack. Then, the obtained stack was spirally wound in such a manner that a separator was positioned outermost. Then, after the winding core was removed, the wound object was pressed while being heated. A wound electrode group was thus produced.
A battery was produced by the same method as with Comparative Example 1 except that this wound electrode group was used in place of the stacked electrode group.

(Comparative Example 6)

A positive electrode coating liquid using a lithium-containing manganese composite oxide $LiMnO_2$ as a positive electrode active material was prepared, by the same method as with Example 6. When producing the positive electrode using this positive electrode coating liquid, press-molding was performed using the same press rolls as those in Comparative Example 1, with saw teeth having even teeth lengths attached thereto. At this time, the electrode thickness was adjusted to 65 $\mu$m. In addition, the cutting position after rolling and the welding position of the current collecting tab were adjusted so that the angle of the direction along which each of the grooves formed during rolling lie was 0° with respect to the current collecting direction, thereby producing the positive electrode. A battery was produced by the same method as with Example 6 except for these changes.

(Comparative Example 7)

A positive electrode coating liquid using a lithium-containing cobalt composite oxide $LiCoO_2$ as a positive electrode active material was prepared, by the same method as with Example 7 . When producing the positive electrode using this positive electrode coating liquid, press-molding was performed using the same press rolls as those in Comparative Example 1, with saw teeth having even teeth lengths attached thereto. At this time, the electrode thickness was adjusted to 55 $\mu$m. In addition, the cutting position after rolling and the welding position of the current collecting tab were adjusted so that the angle of the direction along which each of the grooves formed during rolling extended became 0° with respect to the current collecting direction, thereby producing the positive electrode. A battery was produced by the same method as with Example 7 except for these changes.

(Comparative Example 8)

The same positive electrode as that produced in Example 8, which was press-molded without using the saw-toothed rolls, was produced.

Press-molding was performed without attaching saw-toothed edges to the press rolls when producing an NTO negative electrode. At this time, the electrode thickness was adjusted to 40 $\mu$m. The negative electrode was produced by the same method as with Example 8 except that saw teeth were not used.

A battery was produced by the same method as with Example 1 except that these positive electrode and negative electrode were used.

(Comparative Example 9)

The same positive electrode as that produced in Example 8, which was press-molded without using the saw-toothed rolls, was produced.

Press-molding was performed without attaching saw-toothed edges to the press rolls when producing an MCF negative electrode. At this time, the electrode thickness was adjusted to 35 $\mu$m. The negative electrode was produced by the same method as with Example 9 except that saw teeth were not used.

A battery was produced by the same method as with Example 1 except that these positive electrode and negative electrode were used.

(Comparative Example 10)

The same positive electrode as that produced in Example 8, which was press-molded without using the saw-toothed rolls, was produced.

Press-molding was performed without attaching saw-toothed edges to the press rolls when producing an $SiO_2$ negative electrode. At this time, the electrode thickness was adjusted to 30 $\mu$m. The negative electrode was produced by the same method as with Example 9 except that saw teeth were not used.

A battery was produced by the same method as with Example 1 except that these positive electrode and negative electrode were used.

<Examination of Electrode and Separator>

The electrodes and separators included in the batteries produced in each of the Examples and each of the Comparative Examples described above were measured by the method described above. Specifically, for each of the positive electrode and the negative electrode, the thickness of the electrode, the presence or absence of grooves on the electrode surface, the angles of the grooves with respect to the current collecting direction, the evenness of the depths of the grooves (whether or not multiple grooves are different from each other), the average value of the depths of the grooves, the average value of the widths of the grooves, the average value of the pitches of the grooves, the thickness of the separator, and the vacancy of the separator were examined. The results obtained are shown in Tables 1 to 4 below. The electrode active materials, the materials of the separator, and the structures of the electrode groups are also given in detail in the tables. Specifically, Tables 1 and 2 show the active materials, electrode thicknesses, evenness of groove depths, and groove angles for each of the positive electrode and the negative electrode. Table 3 shows the average values of the groove depths, average values of the groove widths, and average values of groove pitches for each of the positive electrode and the negative electrode. Table 4 shows the materials of the separators, thicknesses of the separators, vacancies of the separators, and shapes of the electrode groups.

[Table 1]

| [Table 1] | Positive Electrode | | | | Negative Electrode | | | |
|---|---|---|---|---|---|---|---|---|
| | Active Material | Thickness [μm] | Evenness of groove depth | Groove Angle [°] | Active Material | Thickness [μm] | Evenness of groove depth | Groove Angle [°] |
| Example 1 | $LiNi_{0.6}Co_{0.2}Mn_{0.2}O_2$ | 40 | uneven | 80 | $Li_4Ti_5O_{12}$ | 50 | (no groove) | - |
| Example 2 | $LiNi_{0.6}Co_{0.2}Mn_{0.2}O_2$ | 40 | uneven | 80 | $Li_4Ti_5O_{12}$ | 50 | (no groove) | - |
| Example 3 | $LiNi_{0.6}Co_{0.2}Mn_{0.2}O_2$ | 40 | uneven | 85 | $Li_4Ti_5O_{12}$ | 50 | (no groove) | - |
| Example 4 | $LiNi_{0.6}Co_{0.2}Mn_{0.2}O_2$ | 40 | uneven | 80 | $Li_4Ti_5O_{12}$ | 50 | (no groove) | - |
| Example 5 | $LiNi_{0.6}Co_{0.2}Mn_{0.2}O_2$ | 40 | uneven | 85 | $Li_4Ti_5O_{12}$ | 50 | (no groove) | - |
| Example 6 | $LiMnO_2$ | 65 | uneven | 80 | $Li_4Ti_5O_{12}$ | 50 | (no groove) | - |
| Example 7 | $LiCoO_2$ | 55 | uneven | 80 | $Li_4Ti_5O_{12}$ | 50 | (no groove) | - |
| Example 8 | $LiNi_{0.6}Co_{0.2}Mn_{0.2}O_2$ | 40 | (no groove) | - | $Nb_2TiO_7$ | 40 | uneven | 80 |
| Example 9 | $LiNi_{0.6}Co_{0.2}Mn_{0.2}O_2$ | 40 | (no groove) | - | MCF | 35 | uneven | 80 |
| Example 10 | $LiNi_{0.6}Co_{0.2}Mn_{0.2}O_2$ | 40 | (no groove) | - | $SiO_2$ | 30 | uneven | 80 |
| Example 11 | $LiNi_{0.8}Co_{0.1}Mn_{0.3}O_2$ | 35 | uneven | 80 | $Li_4Ti_5O_{12}$ | 50 | (no groove) | - |
| Example 12 | $LiNi_{0.6}Co_{0.2}Mn_{0.2}O_2$ | 40 | uneven | 80 | $Li_4Ti_5O_{12}$ | 50 | (no groove) | - |
| Example 13 | $LiNi_{0.6}Co_{0.2}Mn_{0.2}O_2$ | 40 | uneven | 80 | $Li_4Ti_5O_{12}$ | 50 | (no groove) | - |
| Example 14 | $LiNi_{0.6}Co_{0.2}Mn_{0.2}O_2$ | 40 | uneven | 80 | $Li_4Ti_5O_{12}$ | 50 | (no groove) | - |

(continued)

| [Table 1] | Positive Electrode | | | | Negative Electrode | | | |
|---|---|---|---|---|---|---|---|---|
| | Active Material | Thickness [$\mu$m] | Evenness of groove depth | Groove Angle [°] | Active Material | Thickness [$\mu$m] | Evenness of groove depth | Groove Angle [°] |
| Example 15 | $LiNi_{0.6}Co_{0.2}Mn_{0.2}O_2$ | 40 | uneven | 80 | $Li_4Ti_5O_{12}$ | 50 | (no groove) | - |
| Example 16 | $LiNi_{0.6}Co_{0.2}Mn_{0.2}O_2$ | 40 | uneven | 80 | $Li_4Ti_5O_{12}$ | 50 | (no groove) | - |
| Example 17 | $LiNi_{0.6}Co_{0.2}Mn_{0.2}O_2$ | 40 | uneven | 80 | $Li_4Ti_5O_{12}$ | 50 | (no groove) | - |

[Table 2]

| [Table 2] | Positive Electrode | | | | Negative Electrode | | | |
|---|---|---|---|---|---|---|---|---|
| | Active Material | Thickness [μm] | Evenness of groove depth | Groove Angle [°] | Active Material | Thickness [μm] | Evenness of groove depth | Groove Angle [°] |
| Comparative Example 1 | $LiNi_{0.6}Co_{0.2}Mn_{0.2}O_2$ | 40 | even | 80 | $Li_4Ti_5O_{12}$ | 50 | (no groove) | - |
| Comparative Example 2 | $LiNi_{0.6}Co_{0.2}Mn_{0.2}O_2$ | 40 | even | 80 | $Li_4Ti_5O_{12}$ | 50 | (no groove) | - |
| Comparative Example 3 | $LiNi_{0.6}Co_{0.2}Mn_{0.2}O_2$ | 40 | uneven | 10 | $Li_4Ti_5O_{12}$ | 50 | (no groove) | - |
| Comparative Example 4 | $LiNi_{0.6}Co_{0.2}Mn_{0.2}O_2$ | 40 | even | 80 | $Li_4Ti_5O_{12}$ | 50 | (no groove) | - |
| Comparative Example 5 | $LiNi_{0.6}CO_{0.2}Mn_{0.2}O_2$ | 40 | even | 85 | $Li_4Ti_5O_{12}$ | 50 | (no groove) | - |
| Comparative Example 6 | $LiMnO_2$ | 65 | even | 0 | $Li_4Ti_5O_{12}$ | 50 | (no groove) | - |
| Comparative Example 7 | $LiCoO_2$ | 55 | even | 0 | $Li_4Ti_5O_{12}$ | 50 | (no groove) | - |
| Comparative Example 8 | $LiNi_{0.6}Co_{0.2}Mn_{0.2}O_2$ | 40 | (no groove) | - | $Nb_2TiO_7$ | 40 | (no groove) | - |
| Comparative Example 9 | $LiNi_{0.6}Co_{0.2}Mn_{0.2}O_2$ | 40 | (no groove) | - | MCF | 35 | (no groove) | - |
| Comparative Example 10 | $LiNi_{0.6}Co_{0.2}Mn_{0.2}O_2$ | 40 | (no groove) | - | $SiO_2$ | 30 | (no groove) | - |

[Table 3]

| [Table 3] | Positive Electrode | | | Negative Electrode | | |
|---|---|---|---|---|---|---|
| | Average Value of Depths of Grooves [μm] | Average Value of Widths of Grooves [μm] | Average Value of Pitch [μm] | Average Value of Depths of Grooves [μm] | Average Value of Widths of Grooves [μm] | Average Value of Pitch [μm] |
| Example 1 | 5 | 400 | 50 | - | - | - |
| Example 2 | 5 | 400 | 50 | - | - | - |
| Example 3 | 5 | 400 | 50 | - | - | - |
| Example 4 | 5 | 400 | 50 | - | - | - |
| Example 5 | 5 | 400 | 50 | - | - | - |
| Example 6 | 5 | 400 | 50 | - | - | - |
| Example 7 | 5 | 400 | 50 | - | - | - |
| Example 8 | - | - | - | 5 | 400 | 50 |
| Example 9 | - | - | - | 5 | 400 | 50 |
| Example 10 | - | - | - | 5 | 400 | 50 |
| Example 11 | 5 | 400 | 50 | - | - | - |
| Example 12 | 0.5 | 400 | 50 | - | - | - |
| Example 13 | 9 | 400 | 50 | - | - | - |
| Example 14 | 5 | 80 | 50 | - | - | - |
| Example 15 | 5 | 900 | 50 | - | - | - |
| Example 16 | 5 | 400 | 5 | - | - | - |
| Example 17 | 5 | 400 | 150 | - | - | - |
| Comparative Example 1 | 5 | 400 | 50 | - | - | - |
| Comparative Example 2 | 5 | 400 | 50 | - | - | - |
| Comparative Example 3 | 5 | 400 | 50 | - | - | - |
| Comparative Example 4 | 5 | 400 | 50 | - | - | - |
| Comparative Example 5 | 5 | 400 | 50 | - | - | - |
| Comparative Example 6 | 5 | 400 | 50 | - | - | - |
| Comparative Example 7 | 5 | 400 | 50 | - | - | - |
| Comparative Example 8 | - | - | - | - | - | - |
| Comparative Example 9 | - | - | - | - | - | - |
| Comparative Example 10 | - | - | - | - | - | - |

[Table 4]

| [Table 4] | Separator | | | Electrode Group |
|---|---|---|---|---|
| | Material | Thickness [μm] | Vacancy [%] | Shape |
| Example 1 | cellulose | 20 | 60 | stacked |
| Example 2 | cellulose | 15 | 60 | stacked |
| Example 3 | cellulose | 20 | 60 | stacked |
| Example 4 | cellulose | 20 | 60 | wound |
| Example 5 | cellulose | 20 | 60 | wound |
| Example 6 | cellulose | 20 | 60 | stacked |
| Example 7 | cellulose | 20 | 60 | stacked |
| Example 8 | cellulose | 20 | 60 | stacked |
| Example 9 | cellulose | 20 | 60 | stacked |
| Example 10 | cellulose | 20 | 60 | stacked |
| Example 11 | cellulose | 20 | 60 | stacked |
| Example 12 | cellulose | 20 | 60 | stacked |
| Example 13 | cellulose | 20 | 60 | stacked |
| Example 14 | cellulose | 20 | 60 | stacked |
| Example 15 | cellulose | 20 | 60 | stacked |
| Example 16 | cellulose | 20 | 60 | stacked |
| Example 17 | cellulose | 20 | 60 | stacked |
| Comparative Example 1 | cellulose | 20 | 60 | stacked |
| Comparative Example 2 | cellulose | 15 | 60 | stacked |
| Comparative Example 3 | cellulose | 20 | 60 | stacked |
| Comparative Example 4 | polyethylene | 20 | 50 | wound |
| Comparative Example 5 | polyethylene | 20 | 50 | wound |
| Comparative Example 6 | cellulose | 20 | 60 | stacked |
| Comparative Example 7 | cellulose | 20 | 60 | stacked |
| Comparative Example 8 | cellulose | 20 | 60 | stacked |
| Comparative Example 9 | cellulose | 20 | 60 | stacked |
| Comparative Example 10 | cellulose | 20 | 60 | stacked |

<Evaluation of Nonaqueous Electrolyte Battery>

(Measurement Test of Input-Output Performance)

The discharge resistance of the batteries produced in each of the Examples and each of the Comparative Examples above was measured as described below, to evaluate the input-output performance.

The produced batteries were charged and adjusted to an SOC (state of charge) of 50%. After waiting for one hour, the OCV (open circuit voltage) at that time was recorded. Then, a voltage drop that occurred when discharge was performed at a current value of 10 C was measured. A value obtained by subtracting the value of the OCV from the value of the voltage drop that occurred when discharge was performed at a current value of 10 C and dividing the resultant value by the current value of 10 C was determined as the discharge resistance value [mΩ] of the batteries.

(Measurement Test of Voltage Drop due to Self-discharge)

A ΔOCV measurement was performed on each battery, as described below, to examine a voltage drop due to self-discharge.

The respective batteries were charged to an SOC of 50%. The open circuit voltage of the respective batteries in this state was examined. The open circuit voltage at this time was set as $V_0$. The respective batteries were left to stand as is in an ambient temperature environment, and after two days, the open circuit voltage was reexamined. The open circuit voltage after letting the batteries stand for two days was set as $V_2$. A difference between the open circuit voltages before and after letting the batteries stand for two days, that is, a value of $V_2-V_0$, was determined as a voltage drop (ΔOCV) due to self-discharge.

(Nail Penetration Test)

A nail penetration test was conducted on the respective batteries, as described below, to evaluate safety.

Each battery was charged to an SOC of 100%. The battery in this state was laid flat on an electrically insulated platform so as to be stable and not fall over. In detail, the battery was placed so that the side surface corresponding to a flat principal surface of the battery container was in contact with the upper surface of the platform. A nail was set so as to pass through the center of the principal surface opposite to the principal surface in contact with the platform, that is, the center of the upper surface of the battery grounded on the platform. The set nail was <u>punctured</u> through the battery at a rate of 1 mm/min. The change in state of the battery when the nail was punched through was examined. The examined change in state was classified into three stages of "no change", "electrolytic solution ejection", and "ignition or rupture".

The results of the above tests are shown in Table 5 below. Namely, the results of the measurement test of input-output performance, the measurement test of voltage drop due to self-discharge, and the nail penetration test are shown in Table 5.

[Table 5]

| [Table 5] | Discharge Resistance Value [mΩ] | ΔOCV [mV] | Change in State in Nail Penetration Test |
|---|---|---|---|
| Example 1 | 0.82 | -0.65 | No Change |
| Example 2 | 0.79 | -0.8 | No Change |
| Example 3 | 0.85 | -0.65 | No Change |
| Example 4 | 0.82 | -0.71 | No Change |
| Example 5 | 0.85 | -0.71 | No Change |
| Example 6 | 0.76 | -0.75 | No Change |
| Example 7 | 0.88 | -0.69 | No Change |
| Example 8 | 0.91 | -0.67 | No Change |
| Example 9 | 0.72 | -0.76 | No Change |
| Example 10 | 0.89 | -0.69 | No Change |
| Example 11 | 0.86 | -0.67 | No Change |
| Example 12 | 0.79 | -0.84 | No Change |
| Example 13 | 0.95 | -0.57 | No Change |
| Example 14 | 0.78 | -0.82 | No Change |
| Example 15 | 0.93 | -0.59 | No Change |
| Example 16 | 0.76 | -0.86 | No Change |
| Example 17 | 0.95 | -0.56 | No Change |
| Comparative Example 1 | 0.83 | -1.05 | Ignition or Rupture |
| Comparative Example 2 | 0.79 | -1.23 | Ignition or Rupture |
| Comparative Example 3 | 0.82 | -0.67 | Ignition or Rupture |

(continued)

| [Table 5] | Discharge Resistance Value [mΩ] | ΔOCV [mV] | Change in State in Nail Penetration Test |
|---|---|---|---|
| Comparative Example 4 | 0.9 | -0.95 | Electrolytic Liquid Ejection |
| Comparative Example 5 | 0.9 | -0.95 | Electrolytic Liquid Ejection |
| Comparative Example 6 | 0.78 | -1.18 | Ignition or Rupture |
| Comparative Example 7 | 0.91 | -1.11 | Ignition or Rupture |
| Comparative Example 8 | 0.92 | -1.24 | Ignition or Rupture |
| Comparative Example 9 | 0.74 | -1.29 | Ignition or Rupture |
| Comparative Example 10 | 0.91 | -1.26 | Ignition or Rupture |

In the batteries produced in Examples 1 to 5 and 11 to 17 and Comparative Examples 1 to 5, lithium nickel-cobalt-manganese composite oxides were used as the positive electrode active material, and lithium titanate of a spinel structure was used as the negative electrode active material, as shown in Tables 1 and 2. In Examples 1 to 5 and 11 to 17, voltage drop caused by self-discharge had significantly diminished as compared with Comparative Examples 1, 2, 4 and 5, while the respective batteries maintained equivalent input-output performance. In the nail penetration test for evaluating safety, as well, the batteries of these examples had been confirmed to have excellent safety. In Comparative Example 3, input-output performance and voltage drop equivalent to those of Examples 1 to 5 and 11 to 17 were confirmed. The battery of Comparative Example 3, however, ignited and ruptured when punctured with the nail in the nail penetration test, failing to achieve safety. The results of the nail penetration test also demonstrate that safe batteries had not been obtained in Comparative Examples 1, 2, 4 and 5, either. From these results, it is determined that a battery using the electrode according to the embodiment can achieve more excellent input-output performance and improved safety.

In Example 6 with respect to Comparative Example 6, in Example 7 with respect to Comparative Example 7, in Example 8 with respect to Comparative Example 8, in Example 9 with respect to Comparative Example 9, and in Example 10 with respect to Comparative Example 10, voltage drop caused by self-discharge had significantly diminished, while the respective batteries maintained equivalent input-output performance. In the nail penetration test for evaluating safety, as well, the batteries of these examples had been confirmed to have excellent safety.

From the above results, it was confirmed that, even when an active material other than lithium-nickel-cobalt-manganese composite oxides was used unlike the case of Examples 1 to 5 and 11 to 17, the same effects were achieved.

The electrode according to at least one embodiment and example includes an active material-containing layer having plural grooves on a surface thereof. The plural grooves on the active material-containing layer surface have depths different from one another. Each of the grooves lie along directions intersecting at an angle of 80° or more and 90° or less with the current collecting direction. The electrode can realize a battery having excellent input-output performance and high safety, and a battery pack having excellent input-output performance and high safety.

While certain embodiments of the present invention have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiment described herein may be made without departing from the spirit of the invention. The accompanying claims and their equivalents are intended to cover such embodiments or modifications as would fall within the scope and spirit of the inventions.

**Claims**

1. An electrode comprising an active material-containing layer,
   wherein the electrode has multiple grooves having depths differing from each another on a surface of the active material-containing layer, the multiple grooves intersect with a current collecting direction, and the multiple grooves lie along a direction at an angle of 80° to 90° with respect to the current collecting direction.

2. The electrode according to claim 1, wherein an average depth of the multiple grooves is within a range of 1 μm to 8 μm.

3. The electrode according to claim 1 or 2, wherein an average width of the multiple grooves is within a range of 100

$\mu$m to 800 $\mu$m.

4.  The electrode according to any one of claims 1 to 3, wherein an average pitch of the multiple grooves is within a range of 10 $\mu$m to 100 $\mu$m.

5.  The electrode according to any one of claims 1 to 4, having a thickness of 40 $\mu$m or more and less than 75 $\mu$m.

6.  The electrode according to any one of claims 1 to 5, wherein the active material-containing layer comprises an active material that expands and contracts upon insertion and extraction of carrier ions.

7.  The electrode according to claim 6, wherein the active material comprises a lithium-nickel-cobalt-manganese composite oxide represented by $Li_wNi_xCo_yMn_zO_2$, where $0 < w \le 1$, and $x + y + z = 1$.

8.  The electrode according to claim 6, wherein the active material comprises a lithium-nickel-cobalt-manganese composite oxide represented by $Li_wNi_xCo_yMn_zO_2$, where $0 < w \le 1$, $x + y + z = 1$, and $0.7 \le x \le 0.95$.

9.  The electrode according to claim 6, wherein the active material comprises a niobium-titanium composite oxide represented by $Li_aTi_{1-b}M1_bNb_{2-c}M2_cO_{7+\delta}$, where M1 is at least one selected from the group consisting of Zr, Si, and Sn, M2 is at least one selected from the group consisting of V, Ta, and Bi, $0 \le a \le 5$, $0 \le b < 1$, $0 \le c < 2$, and $-0.3 \le \delta \le 0.3$.

10. The electrode according to claim 6, wherein the active material comprises at least one carbon material selected from the group consisting of graphite, coke, vapor grown carbon fiber, mesophase pitch-based carbon fiber, spherical carbon, and resin-fired carbon.

11. The electrode according to claim 6, wherein the active material comprises a Si-containing compound.

12. A battery comprising:

    a positive electrode;
    a negative electrode; and
    an electrolyte,
    wherein at least one of the positive electrode or the negative electrode comprises the electrode according to any one of claims 1 to 5.

13. The battery according to claim 12, further comprising a separator positioned between the positive electrode and the negative electrode.

14. The battery according to claim 13, wherein the separator has a thickness of 2 $\mu$m to 15 $\mu$m.

15. The battery according to claim 13 or 14, wherein the separator is a non-woven fabric having a vacancy of 50% to 80%.

16. The battery according to any one of claims 12 to 15, comprising an electrode group having a wound structure formed by winding a stack comprising the positive electrode and the negative electrode.

17. The battery according to any one of claims 12 to 15, comprising an electrode group having a stacked structure formed of a stack comprising the positive electrode and the negative electrode.

18. A battery pack comprising the battery according to any one of claims 12 to 17.

F I G. 1

F I G. 2

F I G. 3

F I G. 4

F I G. 5

FIG. 6

FIG. 7

EP 4 024 500 A1

FIG. 8

FIG. 9

FIG. 10

F I G. 11

F I G. 12

F I G. 13

F I G. 14

F I G. 15

F I G. 16

F I G. 17

F I G. 18

F I G. 19

F I G. 20

F I G. 21

<div align="center">

**INTERNATIONAL SEARCH REPORT**

</div>

| | International application No. |
|---|---|
| | PCT/JP2019/034209 |

| A. CLASSIFICATION OF SUBJECT MATTER |
|---|
| Int.Cl. H01M4/13(2010.01)i, H01M2/16(2006.01)i, H01M4/38(2006.01)i, H01M4/485(2010.01)i, H01M4/505(2010.01)i, H01M4/525(2010.01)i, H01M4/587(2010.01)i, H01M10/0585(2010.01)i, H01M10/0587(2010.01)i |
| According to International Patent Classification (IPC) or to both national classification and IPC |

| B. FIELDS SEARCHED |
|---|
| Minimum documentation searched (classification system followed by classification symbols) |
| Int.Cl. H01M4/13, H01M2/16, H01M4/38, H01M4/485, H01M4/505, H01M4/525, H01M4/587, H01M10/0585, H01M10/0587 |

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

| Electronic data base consulted during the international search (name of data base and, where practicable, search terms used) |
|---|
| |

| C. DOCUMENTS CONSIDERED TO BE RELEVANT |||
|---|---|---|
| Category* | Citation of document, with indication, where appropriate, of the relevant passages | Relevant to claim No. |
| A | JP 2018-92857 A (SANYO ELECTRIC CO., LTD.) 14 June 2018, paragraph [0032], fig. 1-3 (Family: none) | 1-18 |
| A | JP 2009-218185 A (PANASONIC CORP.) 24 September 2009, fig. 1-5 (Family: none) | 1-18 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 October 2019 (17.10.2019) | 05 November 2019 (05.11.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/034209

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-6275 A (TOSHIBA CORP.) 08 January 2004, paragraph [0050], fig. 5-6 & US 2005/0053833 A1 paragraph [0077], fig. 5-6 & US 2006/0051669 A1 & US 2009/0181310 A1 & WO 2003/088404 A1 & EP 1496562 A1 & EP 2249417 A2 & CN 1659738 A & KR 10-2005-0000381 A | 1-18 |
| A | JP 2013-134894 A (TOYOTA INDUSTRIES CORPORATION) 08 July 2013, fig. 3 (Family: none) | 1-18 |
| A | JP 2006-286404 A (DAINIPPON PRINTING CO., LTD.) 19 October 2006, fig. 4 (Family: none) | 1-18 |

Form PCT/ISA/210 (continuation of second sheet) (January 2015)

**EP 4 024 500 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009059686 A